(19) **Europäisches Patentamt**
**European Patent Office**
**Office européen des brevets**

(11) **EP 1 770 181 B1**

(12) **EUROPEAN PATENT SPECIFICATION**

(45) Date of publication and mention
of the grant of the patent:
**06.11.2013 Bulletin 2013/45**

(51) Int Cl.:
**C22C 38/00** (2006.01)    **C22C 38/14** (2006.01)
**C22C 38/60** (2006.01)    **C21D 9/28** (2006.01)
**C21D 6/00** (2006.01)    **C21D 1/10** (2006.01)
**C22C 38/02** (2006.01)    **C22C 38/04** (2006.01)
**C22C 38/12** (2006.01)

(21) Application number: **05758220.7**

(22) Date of filing: **05.07.2005**

(86) International application number:
**PCT/JP2005/012397**

(87) International publication number:
**WO 2006/008960 (26.01.2006 Gazette 2006/04)**

(54) **COMPONENT FOR MACHINE STRUCTURE, METHOD FOR PRODUCING SAME, AND MATERIAL FOR HIGH-FREQUENCY HARDENING**

KOMPONENTE FÜR EINE MASCHINENSTRUKTUR, VERFAHREN ZU DEREN HERSTELLUNG UND MATERIAL FÜR HOCHFREQUENZHÄRTUNG

COMPOSANT DE STRUCTURE MECANIQUE, SON PROCEDE DE PRODUCTION ET MATIERE DE DURCISSEMENT HAUTE FREQUENCE

(84) Designated Contracting States:
**DE FR GB**

(30) Priority: **16.07.2004   JP 2004010200**

(43) Date of publication of application:
**04.04.2007   Bulletin 2007/14**

(73) Proprietor: **JFE Steel Corporation**
**Tokyo, 100-0011 (JP)**

(72) Inventors:
• **HAYASHI, Toru**
  **Tokyo 1000011 (JP)**
• **OHMORI, Yasuhiro**
  **Tokyo 1000011 (JP)**
• **KUROSAWA, Nobutaka**
  **Tokyo 1000011 (JP)**

• **MATSUZAKI, Akihiro**
  **Tokyo 1000011 (JP)**
• **TOYOOKA, Takaaki**
  **Tokyo 1000011 (JP)**
• **YAMADA, Katsumi**
  **Tokyo 1000011 (JP)**

(74) Representative: **HOFFMANN EITLE**
**Patent- und Rechtsanwälte**
**Arabellastrasse 4**
**81925 München (DE)**

(56) References cited:
**EP-A1- 1 669 469      EP-A1- 1 741 798**
**JP-A- 10 195 589      JP-A- 10 219 392**
**JP-A- 11 029 836      JP-A- 2002 069 577**
**JP-A- 2004 183 065      JP-A- 2004 263 200**
**US-A- 5 803 993      US-B1- 6 270 596**

EP 1 770 181 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

TECHNICAL FIELD

This invention relates to a component for machine structure provided in at least a part thereof with a hardened layer through an induction hardening. As the component for machine structure may be mentioned a drive shaft for an automobile, an input shaft, an output shaft, a crankshaft, inner and outer wheels of a constant velocity joint, a hub, a gear and so on.

RELATED ART

Heretofore, in the components for machine structure such as a drive shaft for an automobile, a constant velocity joint and the like, it is usual to ensure fatigue strengths as a characteristic of the component for machine structure such as torsional fatigue strength, bending fatigue strength, rolling fatigue strength, slip rolling fatigue strength and the like by working a hot rolled steel bar into a given shape through hot forging, cutting, cold forging and the like and then subjecting to induction hardening and tempering.
On the other hand, it is strongly demanded to reduce the weight of the component for the automobile from recent environmental problems. From this viewpoint, it is demanded to more improve the fatigue strengths in the components for the automobile.

As the means for improving the fatigue strengths as mentioned above, there are proposed various methods up to now.
For example, it is considered to increase the hardening depth in the induction hardening for improving the torsional fatigue strength. However, the fatigue strength is saturated at a certain depth even in the increase of the hardening depth. Also, it is effective to improve the grain boundary strength for the improvement of the torsional fatigue strength. From this viewpoint, there is proposed a technique of refining a particle size of prior austenite by dispersing TiC (see, for example, Patent Document 1).

According to the technique disclosed in the above Patent Document 1, it is attempted to refine the particle size of prior austenite by dispersing a great amount of fine TiC in the heating of the induction hardening, so that it is required to solid-solute TiC prior to the hardening, and hence it is adopted to conduct the heating above 1100°C at the hot rolling step. For this end, it is required to raise the heating temperature in the hot rolling, so that there is a problem that the productivity is poor.
Also, there is still a problem that the recent demand on the fatigue strengths is not sufficiently satisfied even by the technique disclosed in Patent Document 1.

Furthermore, Patent Document 1 proposes a shaft component for machine structure wherein the torsional fatigue strength is improved by restricting a ratio of a depth of the hardened layer CD to a radius of the induction hardened shaft component R (CD/R) to 0.3-0.7 and further controlling a value A defined with CD/R, austenite particle size γf from a surface to 1 mm after the induction hardening, average Vickers hardness Hv to (CD/R)=0.1 as induction-hardened and average Vickers hardness in a shaft central portion after the induction hardening to a predetermined range.
However, there is a limit in the improvement of the fatigue properties even in the control of CD/R, so that the recent demand on the torsional fatigue strength could not be yet satisfied.

Patent Document 1: JP-A-2000-154819 (claims, paragraph [0008])
Patent Document 2: JP-A-H08-53714 (claims)

US 5,803,993 A describes an outer ring used for a high strength constant velocity joint, wherein an original austenite crystal grain at an involute serration end towards a mouth part is 8 or more in JIS grain size classification and a surface hardness of the involute serration end is 27 or more in Hv, and a process for producing the outer ring.
US 6,270,596 B 1 describes a process for producing a high strength shaft which comprises the steps of rolling or forging an alloy at a heating temperature of $Ac_3$ to 105°C with a reduction of area of not less than 30 % to obtain a steel product having a hardness after rolling or forging of 85 to 97 HRB, and induction hardening the steel product for obtain the shaft having a hardening depth ratio of not less than 0.25 and an austenitic grain size number as specified in JIS G 0551 of not less than 7.

DISCLOSURE OF THE INVENTION

Problems to be solved by the invention

It is an object of the invention to provide a component for machine structure capable of more improving the fatigue strength as compared with the conventional ones after the induction hardening and a method of producing the same as well as a material for the induction hardening.

Means for solving problems

The inventors have made various studies in order to effectively improve the fatigue strengths of steel materials through the induction hardening. Particularly, the inventors have noticed the torsional fatigue strength as a typical example of the fatigue strengths and made detail examinations thereon, and obtained the following discoveries.

(i) Although the fatigue strength is improved by increasing a transgranular strength of a hardened layer through the induction hardening or a hardness thereof, when the hardness is increased to not less than 750 as a Vickers hardness Hv, the fracture migrates from the transgranular fracture to a fracture at a grain boundary of prior austenite, so that the fatigue strength is not improved even if the hardness is increased over the above value.

(ii) The strength of the prior austenite grain boundary can be improved by refining the grain size of the prior austenite in the hardened layer through the induction hardening, and hence the increase of the fatigue strength can be attained in accordance with the increase of the hardness by making the average grain size of the prior austenite to not more than 7 $\mu$m even if the hardness Hv is not less than 750.

(iii) In order than the hardness Hv of the hardened layer is not less than 750, it is effective to increase contents of one or more of C, Si and P in the starting material, while in order to refine the grain size of the prior austenite in the hardened layer through the induction hardening, it is effective that Mo, B and Ti are included in the starting material and the microstructure prior to the induction hardening is made a fine bainite or martensite introduced with a worked strain through cold working and further that a rapid heating is conducted in the induction hardening and a heating temperature is made low and further a residence time above 800°C is made short.

(iv) Although the tempering is usually carried out as another means for increasing the strength after the induction hardening, it is possible to increase the transgranular strength by omitting this means.

The invention is based on the above knowledge.

That is, the thrust and construction of the invention are as follows.

1. A component for machine structure characterized by comprising a hardened layer through an induction hardening in at least a part thereof, in which the hardened layer of a thickness of not less than 1 mm has a hardness Hv of not less than 750 and an average grain size of prior austenite grains is not more than 7 $\mu$m over a full thickness of the hardened layer; the component having a chemical composition comprising C: 0.3-1.5 mass%, Si: 0.05-3.0 mass%, Mn: 0.2-2.0 mass%, Al: not more than 0.25 mass%, Ti: 0.005-0.1 mass%, Mo: 0.05-0.6 mass%, B: 0.0003-0.006 mass%, S: not more than 0.1 mass% and P: not more than 0.10 mass%,

and further optionally comprising one or more selected from Cr: not more than 2.5 mass%, Cu: not more than 1.0 mass%, Ni: not more than 3.5 mass%, Co: not more than 1.0 mass%, Nb: not more than 0.1 mass%, V: not more than 0.5 mass%, Ca: not more than 0.005 mass%, Te: not more than 0.1 mass%, Se: not more than 0.1 mass%, Bi: not more than 0.5 mass%, Pb: not more than 0.5 mass%, Zr: not more than 0.01 mass% and REM: not more than 0.1 mass%,

and the remainder being Fe and inevitable impurities,

and satisfying at least one of the following equations (1)-(3):

$$C > 0.7 \text{ mass\% } ....(1)$$

$$Si > 1.1 \text{ mass\% } ....(2)$$

$$P > 0.02 \text{ mass\% } ....(3),$$

wherein Mo-based precipitate having an average particle size of not more than 20 nm is dispersed in an amount of not less than 500 per 1 $\mu$m$^3$, and

wherein either or both of bainite structure and martensite structure in the steel microstructure of the starting material prior to the induction hardening is 10 to 90 volume%.

2. A component for machine structure according to item 1, wherein the content of Al in the chemical composition is Al: 0.005-0.25 mass%.

3. A component for machine structure according to item 1, which has a chemical composition comprising C: 0.3-1.5 mass%, Si: 0.05-3.0 mass%, Mn: 0.2-2.0 mass%, Al: not more than 0.25 mass%, Ti: 0.005-0.1 mass%, Mo: 0.05-0.6 mass%, B: 0.0003-0.006 mass%, S: not more than 0.1 mass% and P: not more than 0.10 mass% and the remainder being Fe and inevitable impurities in which the hardened layer is not subjected to a tempering

4. A component for machine structure according to item 3, wherein the content of Al in the composition is Al: 0.005-0.25 mass%.

5. A method of producing a component for machine structure by subjecting a starting material having a chemical composition comprising C:0.3-1.5 mass%, Si: 0.05-3.0 mass%, Mn: 0.2-2.0 mass%, Al: not more than 0.25 mass%, Ti: 0.005-0.1 mass%, Mo: 0.05-0.6 mass%, B: 0.0003-0.006 mass%, S: not more than 0.1 mass% and P: not more than 0.10 mass%,
and further optionally comprising one or more selected from Cr: not more than 2.5 mass%, Cu: not more than 1.0 mass%, Ni: not more than 3.5 mass%, Co: not more than 1.0 mass%, Nb: not more than 0.1 mass%, V: not more than 0.5 mass%, Ca: not more than 0.005 mass%, Te: not more than 0.1 mass%, Se: not more than 0.1 mass%, Bi: not more than 0.5 mass%, Pb: not more than 0.5 mass%, Zr: not more than 0.01 mass% and REM: not more than 0.1 mass%,
and the remainder being Fe and inevitable impurities, and satisfying at least one of the following equations (1)-(3):

$$C > 0.7 \text{ mass\%} \quad ....(1)$$

$$Si > 1.1 \text{ mass\%} \quad ....(2)$$

$$P > 0.02 \text{ mass\%} \quad ....(3)$$

to a hot working, in which the total working ratio at 800-1000 °C is not less than 80 % and cooling in a subsequent temperature region of 700-500 °C is conducted at a rate of not less than 0.2 °C/s, and then subjecting at least a part of a starting material to an induction hardening at least once, wherein an ultimate temperature of the induction hardening is not higher than 1000°C, a temperature rising rate from 600-800 °C is at least 300 °C/s and a heating time is not more than 5 s, and
wherein either or both of bainite structure and martensite structure in steel microstructure of the starting material prior to the induction hardening is 10 to 90 volume%, and Mo-based precipitate having an average particle size of not more than 20 nm is dispersed in an amount of not less than 500 per 1 $\mu m^3$.

6. A method of producing a component for machine structure according to item 5, wherein a content of Al in the chemical composition is Al: 0.005-0.25 mass%.

7. A material for induction hardening used for the formation of a component for machine structure having in at least a part of its surface a hardened layer with an average grain size of prior austenite of not more than 7 $\mu m$, characterized in that the material has a chemical composition comprising C: 0.3-1.5 mass%, Si: 0.05-3.0 mass%, Mn: 0.2-2.0 mass%, Al: not more than 0.25 mass%, Ti: 0.005-0.1 mass%, Mo: 0.05-0.6 mass%, B: 0.0003-0.006 mass%, S: not more than 0.1 mass% and P: not more than 0.10 mass%,
and furtheroptionally comprising one or more selected from Cr: not more than 2.5 mass%, Cu: not more than 1.0 mass%, Ni: not more than 3.5 mass%, Co: not more than 1.0 mass%, Nb: not more than 0.1 mass%, V: not more than 0.5 mass%, Ca: not more than 0.005 mass%, Te: not more than 0.1 mass%, Se: not more than 0.1 mass%, Bi: not more than 0.5 mass%, Pb: not more than 0.5 mass%, Zr: not more than 0.01 mass% and REM: not more than 0.1 mass%
and the remainder being Fe and inevitable impurities, and satisfying at least one of the following equations (1)-(3):

$$C > 0.7 \text{ mass}\% \;\ldots.(1)$$

$$Si > 1.1 \text{ mass}\% \;\ldots.(2)$$

$$P > 0.02 \text{ mass}\% \;\ldots.(3)$$

and having a steel microstructure in which either or both of bainite structure and martensite structure is 10 to 90 volume%,
wherein Mo-based precipitate having an average particle size of not more than 20 nm is dispersed in an amount of not less than 500 per 1 $\mu m^3$.

8. A material for induction hardening according to item 7, wherein the content of Al in the composition is Al: 0.005-0.25 mass%.

Effect of the Invention

According to the invention, there can be stably obtained components for machine structure having excellent fatigue properties exemplifying torsional fatigue property and rolling fatigue property, and hence there are developed considerable effects on the demands such as weight reduction of automobile parts and the like.

BRIEF DESCRIPTION OF THE DRAWINGS

FIG. 1 is a graph showing an influence of a heating temperature in an induction hardening on a grain size of prior austenite in a hardened layer with respect to Mo-added steel and Mo-free steel;
FIG. 2 is a transmission electron microphotograph of a fine precipitate (Mo-based precipitate) effective for super-refining $\gamma$ grains;
FIG. 3 is a graph showing a relation between an average grain size of prior austenite and a torsional fatigue strength with respect to Mo-added steel and Mo free steel;
FIG. 4 is a graph showing a relation between an average grain size of prior austenite and a torsional fatigue strength with or without tempering;
FIG. 5 is a partial section view of a constant velocity joint; and
FIG. 6 is a section view showing a hardened texture layer in an inner wheel of a constant velocity joint.

BEST MODE FOR CARRYING OUT THE INVENTION

The invention will be explained in detail below.
The components for machine structure according to the invention are a drive shaft for an automobile, an input shaft, an output shaft, a crankshaft, inner  and outer wheels of a constant velocity joint, a hub, a gear and so on and have various forms and structures every the component. In any case, they have particularly a hardened layer subjected to a hardening in its portion requiring fatigue strengths or a whole thereof, and the hardened layer is important to have a hardness Hv of not less than 750 and an average grain size of prior austenite of not more than 7 $\mu$m over a full thickness of the hardened layer.
The findings arriving at the above knowledge will be described below.

[Grain size of prior austenite in hardened layer]

When the average grain size of the prior austenite in the hardened layer through the induction hardening exceeds 7 $\mu$m, even if the hardness Hv of the hardened layer is increased to not less than 750 to improve the transgranular strength as mentioned later, the fatigue fracture is caused at a grain boundary of the prior austenite as a starting point. Therefore, grain size of the prior austenite in the hardened layer is required to be not more than 7 $\mu$m, preferably not more than 6 $\mu$m, more preferably not more than 5 $\mu$m, further preferably not more than 3 $\mu$m. Because, the intergranular

strength becomes considerably strong as the grain size is refined. In the conventional technique, even if the transgranular strength is increased, the intergranular strength is not increased and becomes a rate-determining step and hence it is not expected to further increase the strength. On the contrary, the intergranular strength is considerably increased by refining the grain size, so that it is expected to further increase the strength.

Now, the average grain size of the prior austenite in the induction hardened portion is measured as follows. An outermost surface layer in the hardened layer after the induction hardening has a martensite structure of 100% as an area ratio. The region of 100% martensite structure continues to a certain thickness ranging from the surface of the hardened layer, but the surface area of the martensite structure violently decreases after that. In the invention, a region ranging from the surface of the induction hardened portion to a place that the surface area of the martensite structure decreases to 98% is the hardened layer, and an average depth from the surface is a thickness of the hardened layer. As to the hardened layer, the average grain size of the prior austenite are measured at positions of 1/5, 1/2 and 4/5 of the whole of the thickness from the surface, and when the average grain size of the prior austenite is 7 $\mu$m in any positions, it is defined that the average grain size of the prior austenite grains is not more than 7 $\mu$m over the full thickness.

Moreover, the average grain size of the prior austenite grains is measured by corroding a section of the hardened layer with a corroding solution, which is formed by dissolving 50 g of picric acid in 500 g of water and adding 11 g of sodium dodecylbenzene sulfonate, 1 g of ferrous chloride and 1.5 g of oxalic acid, and observing the corroded section at 5 places every each position by means of an optical microscope of from 400 magnification (area of one place: 0.25 mm x 0.225 mm) to 1000 magnification (area of one place: 0.10 mm x 0.09 mm), and then analyzing with an image analysis equipment.

Incidentally, when the fatigue such as the rolling fatigue is dependent upon only the microstructure in the vicinity of an extremely surface layer, some effect is obtained even when the thickness of the hardened layer is about 1 mm, while in case of the torsional fatigue strength, it is preferable to make the thickness of the hardened layer to not less than 2 mm. It is more preferably not less than 2.5 mm, further preferably not less than 3 mm.

[Vickers hardness of hardened layer]

When the Vickers hardness Hv of the hardened layer is less than 750, the transgranular strength of the hardened layer is weak, so that even if the prior austenite grains are refined, it can not be expected to improve the fatigue strength so as to match with such a refining. That is, even when the austenite grains are refined to increase the intergranular strength as mentioned above, if the transgranular strength is not increased, the transgranular fracture becomes rate-determined step and it can not be expected to increase the static strength and fatigue strengths. In the invention, therefore, the Vickers hardness Hv of the hardened layer (corresponding to the transgranular strength) is required to be not less than 750. Moreover, the upper limit of the Vickers hardness Hv of the hardened layer is not particularly limited, but it is preferable to be not more than 900 because when it exceeds 900, the amount of the elements added becomes large and hence the machinability of the base metal, the cold forgeability and the resistance to quenching crack lower.

In the invention, the Vickers hardness is an average of values measured when 98 N (10 kgf) is struck to a position of 1/5 from the surface in the thickness of the hardened layer 5 times.

[Chemical composition]

There will be described a chemical composition suitable for more increasing the transgranular strength of the hardened layer having the aforementioned particle size of prior austenite and Vickers hardness below.

C: 0.3-1.5 mass%

C is an element affecting a greatest influence on the induction hardenability, and contributes to the improvement of the fatigue strengths by increasing the transgranular strength of the hardened layer and more thickening the induction hardened portion. However, when the amount is less than 0.3 mass%, the hardened layer should be considerably increased for ensuring the required torsional fatigue strength, and hence the occurrence of quenching crack becomes remarkable and it is difficult to obtain a bainite structure as mentioned later. While, when it exceeds 1.5 mass%, it becomes inconvenient to ensure the machinability, cold forgeability and resistance to quenching crack. Therefore, the C amount is preferable to be 0.3-1.5 mass%.

Si: 0.05-3.0 mass%

Si increases the transgranular strength of the hardened layer and contributes to the improvement of the fatigue strengths. Further, it is an element useful for obtaining the bainite structure as mentioned later. From this meaning, it is preferable to be not less than 0.05 mass%. However, when it exceeds 3 mass%, it is difficult to ensure the machinability and cold forgeability because ferrite is solid-solution hardened, so that it is preferable to be not more than 3 mass%.

Mn: 0.2-2.0 mass%

Mn is an element for improving the induction hardenability and ensuring the thickness of the hardened layer. However, when the amount is less than 0.2 mass%, the effect is poor. Therefore, the Mn amount is preferable to be not less than 0.2 mass%, further preferably not less than 0.3 mass%. While, when it exceeds 2.0 mass%, the residual austenite increases after the hardening, which is easy to bring about the lowering of the hardness of the surface layer portion. Therefore, it is preferable to be not more than 2.0 mass%. Moreover, when the Mn amount is too large, the machinability tends to become disadvantageous, so that it is more preferably not more than 1.2 mass%, further preferably not more than 1.0 mass%.

Al: 0.005-0.25 mass%

Al is an element effective for the deoxidation of steel. Also, it is an element for suppressing the growth of austenite grains in the heating for the induction hardening to refine the induction hardened portion. When it exceeds 0.25 mass%, the effect is saturated and the increase of the cost is rather caused. Therefore, the Al amount is preferable to be not more than 0.25 mass%. Moreover, the above effect of Al is not developed when the amount is less than 0.001 mass%, so that the amount is more preferably not less than 0.001 mass%. Further, it is preferable to be not less than 0.005 mass%.

Ti: 0.005-0.1 mass%

Ti has an effect that it bonds to N included as an inevitable impurity to form BN with B mentioned later to thereby prevent the fadeaway of the induction hardenability. Therefore, the amount is preferable to be not less than 0.005 mass%. While, when it exceeds 0.1 mass%, a great amount of TiN is formed and tends to lower the fatigue strengths as a starting point of fatigue fracture, so that the Ti amount is preferable to be 0.005-0.1 mass%. Further preferably, it is 0.01-0.07 mass%. Moreover, in order to effectively develop the hardenability of B by surely precipitating solid-soluted N as TiN, it is preferable that the Ti and N amounts are controlled to be Ti (mass%)/N (mass%) $\geq$ 3.42.

Mo: 0.05-0.6 mass%

Mo has an action that austenite is refined by promoting the formation of bainite structure after the hot working in the heating for the induction hardening to refine the hardened layer. Also, it has an action that the growth of austenite grains in the heating for the induction hardening is suppressed to refine the hardened layer. Particularly, when the heating temperature in the induction hardening is 800-1000°C, preferably 800-950°C, the growth of austenite grains can be suppressed remarkably. Further, it is an element effective for the improvement of the hardenability, so that it is also used for the adjustment of the hardenability. In addition, it has an action of suppressing the formation of a carbide to prevent the lowering of the intergranular strength.

Thus, Mo is a very useful element for obtaining the effects of the invention, but when the amount is not less than 0.05 mass%, it is easy to render the average grain size of prior austenite in the hardened layer into not more than 7 $\mu$m, so that it is preferable to be not less than 0.05 mass%. While ,when the Mo amount exceeds 0.6 mass%, the hardness of the steel material in the hot working for shaping into a component form considerably increases to lower the workability. Therefore, the Mo amount is preferably 0.05-0.6 mass%, more preferably 0.1-0.6 mass%, further preferably 0.3-0.4 mass%.

Moreover, according to the inventors' examinations, the dragging effect through solid-solution atoms (Solute Drug Effect), pinning effect and the like are considered as a possibility on the refining effect of the prior austenite grains through Mo. Although it is not necessarily clear how to take these effects or the other effect, it is confirmed to develop at least the pinning effect. The details will be described later.

B: 0.0003-0.006 mass%

B is useful for refining the grain size of the prior austenite in the hardened layer when the microstructure prior to the induction hardening includes the bainite structure or martensite structure as mentioned later. Also, the addition of a slight amount improves the induction hardenability and thickens the hardened layer and hence has an effect of improving the fatigue strengths. Furthermore, it is preferentially segregated in the grain boundary to reduce P concentration segregated in the grain boundary, and hence the intergranular strength is increased to improve the fatigue strengths. However, the effects are poor when the amount is less than 0.0003 mass%. While, when it exceeds 0.006 mass%, the effects are saturated and the increase of the cost is rather caused. Therefore, the B amount is preferably 0.0003-0.006 mass%, more preferably 0.0005-0.004 mass%, further preferably 0.0015-0.003 mass%.

S: not more than 0.1 mass%

S is an element forming MnS to improve the machinability of steel. When the amount exceeds 0.1 mass%, it is segregated in the grain boundary to lower the intergranular strength. Therefore, the S amount is preferably not more than 0.1 mass%, further preferably not more than 0.06 mass%.

P: not more than 0.10 mass%

P increases the transgranular strength of the hardened layer and contributes to the improvement of the fatigue strengths. However, when the amount exceeds 0.10 mass%, it is segregated in the grain boundary to lower the intergranular strength. Therefore, the P amount is preferable to be not more than 0.10 mass%.

The remainder other than the above elements may be Fe and inevitable impurities. However, it is particularly preferable to adjust the chemical composition so as to satisfy at least one of the following equations (1)-(3):

$$C > 0.7 \text{ mass\%} \ldots (1)$$

$$Si > 1.1 \text{ mass\%} \ldots (2)$$

$$P > 0.02 \text{ mass\%} \ldots (3)$$

By satisfying either of the equations (1) to (3) can be made the Vickers hardness Hv of the hardened layer to not less than 750 to increase the transgranular strength, whereby the effect of improving the fatigue strengths accompanied with the refining of the average particle size of prior austenite to not more than 7 $\mu$m can be developed considerably.

In the invention, the tempering treatment usually conducted after the induction hardening can be omitted. In this case, the temper softening is not caused, so that even if either of the equations (1) to (3) is not satisfied, Hv of not less than 750 can be satisfied in the above chemical composition range. In case of omitting the tempering, therefore, it is not necessarily required to satisfy at least one of the equations (1) to (3).

The inclusion of one or more selected from the following elements into the above chemical composition is effective to further improve the fatigue strengths.

Cr: not more than 2.5 mass%

Cr is effective for the improvement of the hardenability and is an element useful for ensuring the hardened depth, and may be added. However, when the amount is excessive, the carbide is stabilized to promote the formation of the residual carbide, which lowers the intergranular strength and deteriorates the fatigue strengths. Therefore, the Cr amount is desirable to be reduced as far as possible, but is allowed up to 2.5 mass%. Preferably, it is not more than 1.5 mass%. Moreover, in order to develop the effect of improving the hardenability, it is preferable to be not less than 0.03 mass%.

Cu: not more than 1.0 mass%

Cu is effective for the improvement of the hardenability and also is solid-soluted in ferrite, in which the fatigue strengths are improved by such a solid solution strengthening. Furthermore, the formation of the carbide is suppressed to control the lowering of the intergranular strength due to the carbide and improve the fatigue strengths. However, when the amount exceeds 1.0 mass%, cracks are caused in the hot working, so that the addition amount is not more than 1.0 mass%. More preferably, it is not more than 0.5 mass%. Moreover, the addition amount of less than 0.03 mass% is small in the effect of improving the hardenability and the effect of suppressing the lowering of the intergranular strength, so that it is desirable to be not less than 0.03 mass%. Preferably, it is 0.1-1.0 mass%.

Ni: not more than 3.5 mass%

Ni is an element improving the hardenability and is used in case of adjusting the hardenability. Also, it is an element suppressing the formation of the carbide to suppress the lowering of the intergranular strength due to the carbide and improve the fatigue strengths. However, Ni is a very expensive element, so that when it is added over 3.5 mass%, the cost of steel material increases, and hence the addition amount is not more than 3.5 mass%. Moreover, the addition amount of less than 0.05 mass% is small in the effect of improving the hardenability and the effect of suppressing the lowering of the intergranular strength, so that it is desirable to be not less than 0.05 mass%. Preferably, it is 0.1-1.0 mass%.

Co: not more than 1.0 mass%

Co is an element suppressing the formation of the carbide to suppress the lowering of the intergranular strength due to the carbide and improve the fatigue strengths. However, Co is a very expensive element, so that when it is added over 1.0 mass%, the cost of steel material increases, and hence the addition amount is not more than 1.0 mass%. Moreover, the addition amount of less than 0.01 mass% is small in the effect of suppressing the lowering of the intergranular strength, so that it is desirable to be not less than 0.01 mass%. Preferably, it is 0.02-0.5 mass%.

Nb: not more than 0.1 mass%

Nb has an effect of improving the hardenability but also bonds to C, N in steel to act as a precipitation strengthening element. Also, it is an element improving the resistance to temper softening. The fatigue strengths are improved by these effects. However, when the amount exceeds 0.1 mass%, these effects are saturated, so that 0.1 mass% is an upper limit. Moreover, the addition amount of less than 0.005 mass% is small in the precipitation strengthening action and the effect of improving the resistance to temper softening, so that it is desirable to be not less than 0.005 mass%. Preferably, it is 0.01-0.05 mass%.

V: not more than 0.5 mass%

V bonds to C, N in steel to act as a precipitation strengthening element. Also, it is an element improving the resistance to temper softening. The fatigue strengths are improved by these effects. However, when the amount exceeds 0.5 mass%, the effects are saturated, so that it is not more than 0.5 mass%. Moreover, the addition amount of less than 0.01 mass% is small in the effect of improving the fatigue strengths, so that it is desirable to be not less than 0.01 mass%. Preferably, it is 0.03-0.3 mass%.

Ca: not more than 0.005 mass%

Ca forms a sulfide with MnS, which acts as a chip breaker to improve the machinability, so that it may be added, if necessary. However, when the amount is added over 0.005 mass%, the effect is saturated and the cost increases, so that it is not more than 0.005 mass%. Moreover, when it is less than 0.0001 mass%, the effect of improving the machinability is small, so that it is preferable to be not less than 0.0001 mass%.

Te: not more than 0.1 mass%

Se: not more than 0.1 mass%

Se and Te form MnSe and MnTe through bonding with Mn, respectively, which act as a chip breaker to improve the machinability. However, when the amount exceeds 0.1 mass%, the effect is saturated and the cost increases, so that each amount is not more than 0.1 mass%. Also, in order to improve the machinability, it is preferable that Se amount is not less than 0.003 mass% and Te amount is not less than 0.003 mass%, respectively.

Bi: not more than 0.5 mass%

Bi improves the machinability through the fusion, lubrication and embrittlement actions in the cutting, and may be added for this purpose. However, when it is added over 0.5 mass%, the effect is saturated but also the cost increases, so that it is not more than 0.5 mass%. Moreover, when it is less than 0.01 mass%, the effect of improving the machinability is small, so that it is preferable to be not less than 0.01 mass%.

Pb: not more than 0.5 mass%

Pb improves the machinability through the fusion, lubrication and embrittlement actions in the cutting, and may be added for this purpose. However, when it is added over 0.5 mass%, the effect is saturated but also the cost increases, so that it is not more than 0.5 mass%. Moreover, when it is less than 0.01 mass%, the effect of improving the machinability is small, so that it is preferable to be not less than 0.01 mass%.

Zr: not more than 0.01 mass%

Zr forms a sulfide with MnS, which acts as a chip breaker to improve the machinability. However, when it exceeds 0.01 mass%, the effect is saturated but also the cost increases, so that it is not more than 0.01 mass%. Moreover, when it is less than 0.0o3 mass%, the effect of improving the machinability is small, so that it is preferable to be not less than 0.003 mass%.

REM: not more than 0.1 mass%

REM forms a sulfide with MnS, which acts as a chip breaker to improve the machinability. However, when it exceeds 0.1 mass%, the effect is saturated but also the cost increases, so that it is not more than 0.1 mass%. Moreover, in order to improve the machinability, REM is preferable to be not less than 0.0001 mass%.

Although the above is described with respect to the preferable chemical composition range, the chemical composition is limited to the above range and further the steel texture prior to the induction hardening is made to the following texture, whereby there can be obtained the aforementioned average particle size of the prior austenite of not more than 7 $\mu$m.

That is, it is preferable that the microstructure of the base metal, i.e. microstructure prior to the hardening (corresponding to the microstructure other than that of the hardened layer after the induction hardening) has a bainite structure and/or a martensite structure and a total of either or both of the bainite structure and the martensite structure is not less than 10 volume%. Because, the bainite structure or the martensite structure is a microstructure finely dispersing the carbide therein as compared with a ferrite-pearlite microstructure, so that an area of an ferrite/carbide interface as a nuclear formation site of austenite in the heating and hardening increases to refine the resulting austenite, which effectively contributes to the refining of the grain size in the hardened layer after the hardening. Further, such a refining of the grain size in the hardened layer after the hardening increases the intergranular strength and improves the fatigue strengths. Here, it is more preferable that the total of either or both of the bainite structure and the martensite structure is not less than 20 volume%.

Also, an upper limit of a microstructure fraction in the total of either or both of the bainite structure and the martensite structure is about 90 volume%. Because, when the microstructure fraction exceeds 90 volume%, the effect of refining the prior austenite grains in the hardened layer through the hardening is saturated but also the machinability is rapidly deteriorated.

Moreover, as to the refining of the grain size in the hardened layer after the hardening, the martensite structure has an effect approximately equal to that of the bainite structure. However, the bainite structure is advantageous as compared with the martensite structure because the amount of alloying elements added is less from an industrial viewpoint, and the machinability is good, and it is possible to produce at a low cooling rate.

Further, the volume fraction ratio of bainite and martensite is preferable to be generally bainite:martensite = 100:0-40:60. As the microstructure prior to the hardening, the martensite structure is preferable for refining the grain size of the prior austenite in martensite of the hardened layer after the induction hardening. However, since martensite is hard, if a great amount of martensite is included in the base metal, the machinability lowers. Therefore, the volume fraction ratio of bainite and martensite is preferable to be bainite:martensite = 100:0-40:60.

Next, the production method of the component for machine structure according to the invention will be explained. The component for machine structure according to the invention can be produced by subjecting a steel material having the aforementioned chemical composition to a hot working such as bar steel rolling, hot forging or the like to shape into a component and then subjecting at least a part of the component to an induction hardening under a condition of heating temperature: 800-1000°C. In this case, the term "at least a part" means a portion requiring fatigue strengths.

There is the following method for rendering the average grain size of prior austenite in the induction hardened portion into not more than 7 $\mu$m.

In the hot working, the total working ratio at 800-1000°C is not less than 80% and the subsequent temperature region of 700-500°C is cooled at a rate of not less than 0.2°C/s. Under these conditions, the microstructure prior to the hardening can be made to uniform and fine bainite and/or martensite structure (microstructure fraction: not less than 10 volume%). That is, since bainite and martensite are a microstructure finely dispersing the carbide therein as compared with a ferrite-pearlite microstructure, the area of ferrite/carbide interface as a nucleus formation site of austenite increases in the heating for the induction hardening, which is advantageous for refining the resulting austenite. For this end, it is required that the microstructure fraction in the total of either or both of bainite and martensite is not less than 10 volume%. Further, when the cooling rate in the temperature region of 700-500°C is less than 0.2°C/s, the microstructure fraction in the total of either or both of bainite and martensite can not be made to not less than 10 volume%. More preferably, the cooling rate is not less than 0.5°C/s. Moreover, the volume ratio of bainite and martensite is preferable to be generally bainite: martensite = 100:0-40:60 as previously mentioned.

Furthermore, the bainite and/or martensite structure prior to the induction hardening can be more refined by subjecting to a working of not less than 20% at a temperature region of lower than 800°C Prior to the induction hardening (hereinafter referred to as a second working step), whereby the further refining of the prior austenite grains after the induction hardening can be attained, so that it is preferable to conduct the second working step. The working at the temperature region of lower than 800°C may be carried out prior to the cooling at the above cooling rate (temperature region of 700-800°C) in the hot working step, or a separate cold working may be conducted after the cooling or a warm working may be conducted by re-heating at a temperature of not higher than $A_1$ transformation point. The working below 800°C is preferable to be not less than 30%.

As the working method are mentioned, for example, cold forging, cold ironing, forming of rolling, shot peening and the like. By conducting the working below 800°C is refined the bainite or martensite structure prior to the induction hardening, and hence the average grain size of the prior austenite in the hardened layer obtained after the induction hardening becomes finer to more improve the fatigue strengths.

The prior austenite grains having an average grain size of not more than 7 $\mu$m are first obtained by combining the adjustment of the microstructure prior to the hardening by the above working and cooling with the following induction hardening conditions.

At first, when the heating temperature is lower than 800°C, the formation of austenite microstructure is insufficient and the hardened layer can not be obtained. On the other hand, when the heating temperature exceeds 1000°C or when the temperature rising rate at 600-800°C is less than 300°C/s, the growth of the austenite grains is promoted and at the same time the scattering of the grains becomes large to lower the fatigue strengths. That is, as to the grain size of the prior austenite in the finally obtained hardened layer, it is important how to prevent the grain growth at the austenite zone in the heating for the hardening. When the microstructure prior to the hardening is a microstructure having fine bainite or martensite as mentioned above, there are many nucleus formation sites for inverse transformation to austenite, so that when the cooling is started while the produced austenite grains do not grow, the average particle size of the prior austenite in the hardened microstructure can be refined. The growth of the austenite grains proceeds as the temperature becomes higher or as the keeping time in the austenite zone becomes longer, in order to prevent the grain growth and finally obtain the prior austenite grains having an average grain size of not more than 7 $\mu$m, the ultimate temperature in the heating is not higher than 1000°C and the temperature rising rate at 600-800°C is not less than 300°C/s.

Moreover, the ultimate temperature in the heating is preferable to be 800-950°C, and the temperature rising rate at 600-800°C is preferably not less than 700°C/s, more preferably not less than 1000°C/s.

Also, as the residence time above 800°C in the induction heating becomes long, the austenite grains grow and the grain size of the prior austenite tends to finally exceed over 7 $\mu$m, so that the residence time above 800°C is not more than 5 seconds. More preferably, the heating time is not more than 3 seconds.

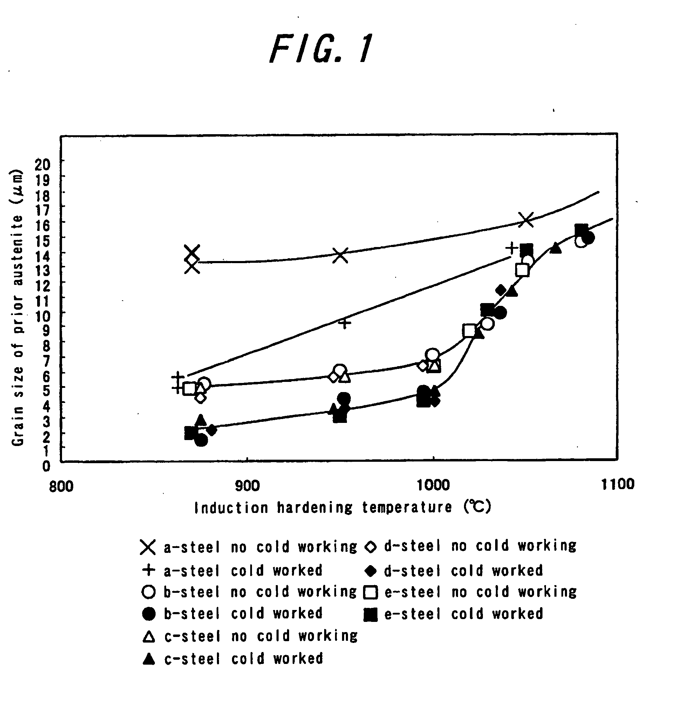

Moreover, the above effects develop more remarkably in steels containing Mo within the range defined in the invention. That is, FIG. 1 shows results examined on a relation between a heating temperature in an induction hardening and a grain size of prior austenite in a hardened layer with respect to Mo-added steel and Mo-free steel.

The results shown in FIG. 1 are obtained as follows.

That is, 150 kg of a steel material having a chemical composition shown in the following a-steel, b-steel, c-steel, d-steel and e-steel is melted in a vacuum melting furnace, hot-forged into 150 mm square to form a dummy billet, which is subjected to a hot working of 80% at 850°C and cooled at 0.7°C/s within a temperature range of 700-500°C to form a bar steel rolled material. Further, a part of the bar steels is subjected to a cold working of 20% after the cooling as a second working step.

(a-steel) C: 0.8 mass%, Si: 0.1 mass%, Mn: 0.78 mass%, P: 0.011 mass%, S: 0.019 mass%, Al: 0.024 mass%, Ti: 0.017 mass%, B: 0.0013 mass%, N: 0.0043 mass%, O: 0.0015 mass%, remainder: Fe and inevitable impurity

(b-steel) C: 0.53 mass%, Si: 0.1 mass%, Mn: 0.74 mass%, P: 0.011 mass%, S: 0.019 mass%, Al: 0.024 mass%, N: 0.0039 mass%, Mo: 0.37 mass%, Ti: 0.018 mass%, B: 0.0013 mass%, remainder: Fe and inevitable impurity

(c-steel) C: 0.9 mass%, Si: 0.1 mass%, Mn: 0.78 mass%, P: 0.011 mass%, S: 0.019 mass%, Al: 0.024 mass%, Mo: 0.37 mass%, Ti: 0.017 mass%, B: 0.0013 mass%, N: 0.0043 mass%, remainder: Fe and inevitable impurity

(d-steel) C: 0.42 mass%, Si: 1.5 mass%, Mn: 0.78 mass%, P: 0.011 mass%, S: 0.019 mass%, Al: 0.024 mass%, Mo: 0.37 mass%, Ti: 0.017 mass%, B: 0.0013 mass%, N: 0.0043 mass%, remainder: Fe and inevitable impurity

(e-steel) C: 0.42 mass%, Si: 0.2 mass%, Mn: 0.78 mass%, P: 0.05 mass%, S: 0.019 mass%, Al: 0.024 mass%, Mo: 0.37 mass%, Ti: 0.017 mass%, B: 0.0013 mass%, N: 0.0043 mass%, remainder: Fe and inevitable impurity

A test specimen for torsional fatigue is sampled from the resulting bar steel, subjected to an induction hardening at a frequency of 10-200 kHz and a heating temperature of 870-1050°C and further subjected to a tempering in a heating furnace under conditions of 170°C x 30 minutes to obtain a test material. The induction hardening conditions are adjusted so that the temperature rising rate is not less than 300°C/s and the residence time above 800°C is not more than 1 second. The thus obtained test material is subjected to a torsional fatigue test to measure a stress broken at torsion number of $10^5$ on the torsional stepped test specimen of 18 mm$\phi$. Also, the average grain size of prior austenite in the hardened layer through the induction hardening is measured by the previously mentioned method. Further, the Vickers hardness is measured at a position of 1/5 of the full thickness from the surface of the hardened layer. As the Vickers hardness is adopted an average value measured when 98 N (10 kgf) is struck 5 times.

As shown in FIG. 1, in any of the Mo-added steels and Mo-free steels, the grain size of prior austenite in the hardened layer can be made small by lowering the heating temperature in the induction hardening. Particularly, in case of the Mo-added steels, the refining of the grain size in the hardened layer is remarkably attained by rendering the ultimate temperature in the heating to not higher than 1000°C, preferably not higher than 950°C.

Although the reason on this phenomenon is not clear, the following can be presumed in relation to a carbonitride containing Mo and Ti. That is, it is considered that in case of the Mo-added steel, the above Mo-based fine carbonitride is precipitated to develop a strong pinning force, whereby the austenite grains are more refined as compared with the Mo-free steel. However, even in the induction hardening for a short time, it is considered that if the heating temperature largely exceeds over 1000°C, the fine $(Mo, Ti)_2(C, N)$ is dissolved to lessen the pinning effect.

Moreover, it can be seen from FIG. 1 that in case of the Mo-added steel, the grain size of the prior austenite can be more refined by adding the second working step (cold working).

Further, the inventors have guessed that in the steels containing Mo, the reason why the average grain size of prior austenite in the hardened layer through the induction hardening can be more refined to improve the fatigue strengths is due to the fact that the fine Mo-based precipitates are highly dispersed to make the above pinning effect large.

Now, the above a-steel is melted, rolled, subjected to forgings of 80% at 850°C and 25% at 750°C and then cooled in air (cooling rate in air: 0.8°C/s). Then, a sample for the observation with a transmission electron microscope is taken out from the starting material prior to the induction hardening to observe a state of fine precipitates. The sample for the observation with the transmission electron microscope is proved by taking out a flat plate sample from the central portion of the starting material and subjecting to an electrolytic polishing with a perchloric acid-methanol based electrolyte for thinning. As the observation zone is too thin, the frequency of dropping out the precipitated particles becomes high, while as the zone becomes too thick, it is difficult to recognize the precipitated particles, so that the thickness of the observation zone is adjusted to a range of 50-100 nm. Moreover, the thickness of the sample is estimated from an electron energy loss spectrum.

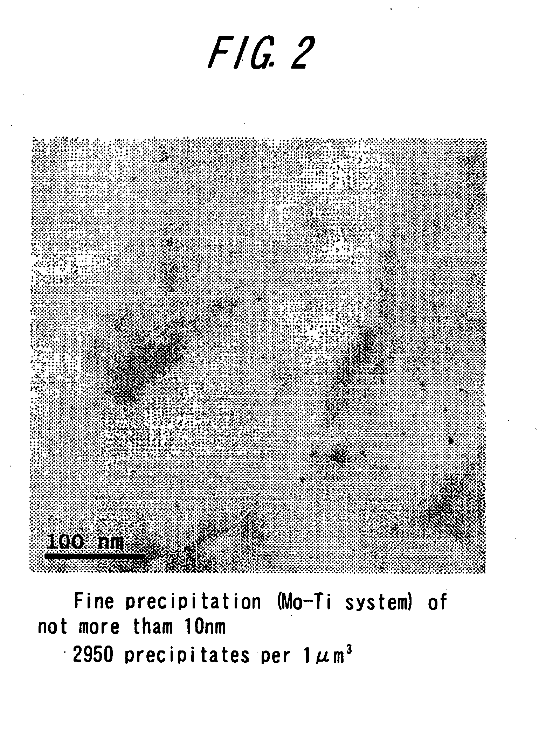

In FIG. 2 is shown an example of the actually obtained transmission electron microphotograph. Considering that the thickness of the sample in the view field is about 0.1 $\mu$m, it is revealed that fine precipitates having a diameter of about 5-10 nm are dispersed in a high density of about 3000 particles per 1 $\mu m^3$.

In the induction hardening, a nucleus of austenite is formed from a grain boundary of bainite or martensite, a packet boundary, a carbide and the like, which grows into grains. The above fine precipitates control the movement of the grain boundary face so as to push a finger (precipitates) into a balloon (grain boundary face) when the austenite grain boundary face arrives at the precipitates and passes therethrough. Such a control of moving the boundary face is called as a pinning. The pinning force is large as the precipitates becomes small when the amount of the precipitates is constant, or is strong as the amount of the precipitates becomes large when the size of the precipitates is constant.

In the induction heating according to the invention, it is guessed that the pinning is caused by the fine precipitates as shown in FIG. 2 to more promote the refining of the average grain size of prior austenite. Furthermore, it is confirmed that the fine precipitates shown in FIG. 2 are existent even in the material after the induction hardening below 1000°C, from which it is considered that the hardly solubility to the heat treatment at a high temperature for a short time effectively acts to the control of the grain growth of austenite in the induction hardening.

Then, the inventors conducted a model calculation by varying a precipitation volume ratio of Mo in order to estimate the influence of the precipitate dispersed state on the average grain size of prior austenite in the induction heating treatment. That is, assuming that the solid solution of Mo into the other precipitation phase is slight, if a precipitation volume ratio: f and average grain size: d of the Mo-based fine precipitates are determined, there is estimated the number of Mo-based fine precipitates per 1 $\mu m^3$ (precipitation density) in the case of uniform dispersion precipitation. If the average grain size of the prior austenite is governed by the pinning of the fine precipitation, such a size is inversely proportional to the precipitation density. So, there are examined the grain size and precipitation density developing the pinning effect considering that the grain size and density of the precipitates in FIG. 2 attain the average grain size of prior austenite of 2 $\mu$m. As a result, it has been found that the number of the precipitates per 1 $\mu m^3$, which is directly effective for the control of the average grain size of the prior austenite, varies in accordance with the volume ratio of the precipitates, but when the volume ratio is, for example, about 0.2-0.4%, the sufficient pinning effect is developed and the preferable range capable of realizing the refining of the prior austenite grains is as follows.

That is, in order to attain the more refining of the prior austenite grains, it is preferable to ensure not less than 500 fine precipitated particles having a diameter of not more than 20 nm. Further, it is desirable to ensure not less than 1000 fine precipitates particles having a diameter of not more than 15 nm, more preferably not less than 2000 fine precipitated particles having a diameter of not more than 12 nm.

Then, as the residue after the precipitates are extracted from the base metal is identified by an X-ray diffractometry, it is guessed to be mainly hcp-type $(Mo, Ti)_2(C, N)$. Further, it has been revealed from results of EDX analysis attached with the transmission electron microscope that the atomic ratio of Mo to Ti is about 8:2 and Mo is a main component. Moreover, the precipitates include a composition deviated from a stoichiometric composition of complete $(Mo, Ti)_2(C, N)$. In any case, it is considered to be a composite carbonitride including Mo and Ti.

Now, the $(Mo, Ti)_2(C, N)$ precipitate is known to be relatively hard different from the precipitate of Cu or the like and considered to be high in the ability preventing the pass through the grain boundary face. Also, considering that Mo is fairly larger than Ti in the composition ratio and Mo is a hardly dispersing element, it is not thought that $(Mo, Ti)_2(C, N)$ becomes rapidly large even it is kept within a temperature range of about 600-700°C as a $(Mo, Ti)_2(C, N)$ precipitation temperature for a short time. Therefore, in order to increase the precipitation amount of $(Mo, Ti)_2(C, N)$ to enhance the distribution density, the newly precipitation of $(Mo, Ti)_2(C, N)$ can be expected by isothermally keeping the above temperature range within a range of providing a microstructure fraction of bainite and martensite as mentioned later for a short tim while suppressing the coarsening of the previously precipitated $(Mo, Ti)_2(C, N)$ at minimum.

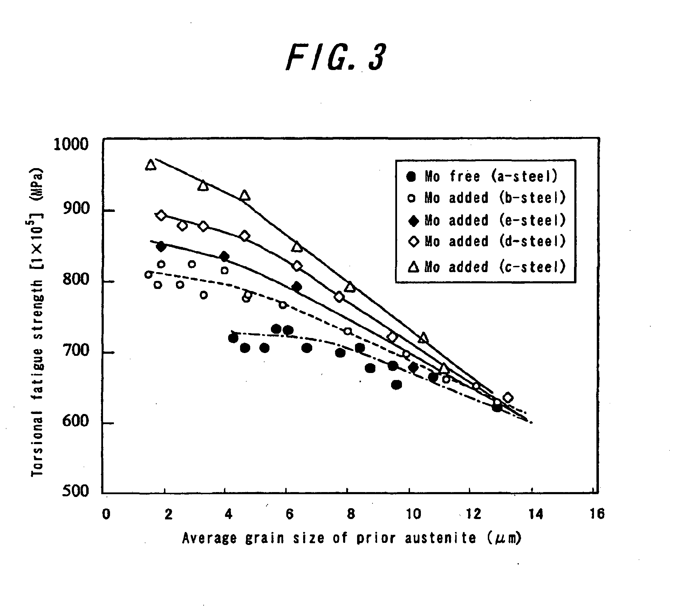

In FIG. 3 is shown a relation between a grain size of prior austenite and a torsional fatigue strength in the hardened layer. As seen from this figure, in the Mo-added steel, the grain size becomes small even in a region that the grain size of the prior austenite is not more than 7 μm and also the fatigue properties are improved. On the contrary, in the Mo-free steel, as the grain size becomes not more than 7 μm, even if the grain size is made further smaller than the above value, the fatigue strengths are not improved. This is considered due to the fact that since the hardness of the hardened layer in the Mo-free steel is lower than that of the Mo-added steel, when the grain size of the prior austenite is refined over a certain level, the fatigue fracture is a transgranular fracture and is not affected by the grain size of the prior austenite.

Furthermore, it has been seen that when any content of Si, P is increased in the Mo-added steel c-steel, d-steel, e-steel), the effect of improving the torsional fatigue strength is large at a region that the grain size of the prior austenite is not more than 7 μm. Therefore, as the Vickers hardness of the hardened layer is examined, it has been proved that the effect of improving the fatigue strengths by the refining of the prior austenite grains becomes very large when Hv of a-steel Reference Example is 700, Hv of b-steel Reference Example is 740, Hv of c-steel is 902, Hv of d-steel is 775, Hv of e-steel is 760 and the hardness Hv of the hardened layer is not less than 750.

Then, the inventors have discovered that an increment of the fatigue strengths by the refining of the grain size of the prior austenite can be made large by increasing the hardness of the above hardened layer and get an idea that the transgranular strength can be raised by omitting the tempering treatment after the induction hardening instead of the feature that the transgranular strength is raised by increasing any content of C, Si and P, and hence the fatigue strengths are raised by the omission of the tempering treatment.

Now, the torsional fatigue strength is examined on the above a-steel and b-steel provided that the tempering treatment is omitted in the step of preparing the specimen for the torsional fatigue test. The Vickers hardness Hv in the a-steel Reference Example and b-steel Reference Example omitting the tempering is 740 and 780, respectively.

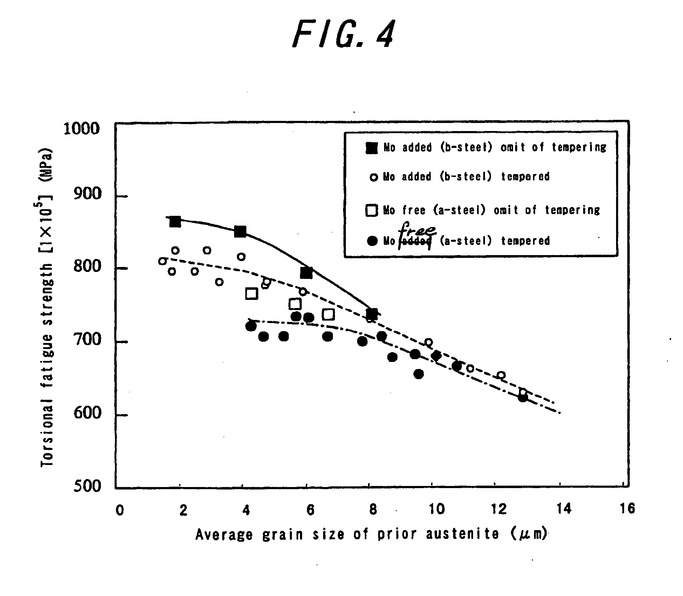

In FIG. 4 is shown a relation between a grain size of prior austenite and torsional fatigue property in the hardened layer for the comparison between tempering and no tempering. From FIG. 4, it is seen that the fatigue strengths can be improved even by omitting the tempering.

Thus, the invention can positively adopt the method of conducting no tempering. In the usual high-strength steels, there is a case that cracks are caused in the component as the tempering is omitted. For this end, the tempering treatment after the induction hardening is a usual step. Such cracking is usually an intergranular fracture, which results from the lacking of the intergranular strength. In the invention, however, since the intergranular strength is high through the refining of the prior austenite grains, the cracking is hardly caused even in the omission of the tempering treatment. The omission of the tempering treatment is effective in the deterrence of softening due to the tempering and the reduction of the cost based on the tempering.

EXAMPLE 1

100 kg of a steel shown in Table 1 is melted and heated to 1200°C and shaped into a sample for torsional fatigue test under hot working conditions and cold working conditions shown in Table 2. The shaped sample is first subjected to an induction hardening at 1050°C and subsequently to an induction hardening under conditions shown in Table 2. Moreover, the induction hardening at 1050°C is not carried out in Test No. 10. Also, in the tests other than Test Nos. 29 and 30, the tempering of 160°C x 1 h. is carried out after the induction hardening. The grain size of prior austenite and hardness in the induction hardened portion are measured in the same method as mentioned above. In the torsional fatigue test, stress broken at torsion number of $10^5$ is measured on the torsional stepped test specimen of 18 mmφ.

Also, the microstructure prior to the induction hardening is observed by means of an optical microscope to identify the microstructure, and at the same time the microstructure fraction (volume%) in one or total of bainite and martensite is measured.

The above measured results are also shown in Table 2. Nos. 7 and 25 are comparative examples wherein all contents of C, Si and P are low, and it is seen that the fatigue strengths in the invention examples are further improved as compared with these comparative examples. Also, when the content of Mo, B or Ti is insufficient as shown in Nos. 26, 27 and 28, the grain size of the prior austenite becomes coarse and the torsional fatigue strength lowers. In Nos. 26, 27 and 28, the microstructure of the base metal is particularly rendered into ferrite-pearlite, so that the grain size of the prior austenite is coarsened and the fatigue strengths lower. Furthermore, when the tempering treatment after the induction hardening is not conducted as shown in Nos. 29 and 30, the fatigue strengths are further improved as compared with steels of Nos. 1 and 7. In steel of No. 31, the total working ratio at 800-1000°C in the hot working is small, so that the grain size of the prior austenite becomes large and the fatigue strengths are low.

[Table 1]

| Symbol of steel | Chemical composition (mass%) | | | | | | | | | | |
|---|---|---|---|---|---|---|---|---|---|---|---|
| | C | Si | Mn | P | S | Al | Mo | Ti | B | N | others |
| A | 0.75 | 0.51 | 0.77 | 0.01 | 0.023 | 0.024 | 0.45 | 0.021 | 0.0023 | 0.0040 | |
| B | 1.21 | 0.50 | 0.78 | 0.01 | 0.023 | 0.023 | 0.44 | 0.023 | 0.0021 | 0.0042 | |
| C | 1.45 | 0.50 | 0.78 | 0.01 | 0.023 | 0.024 | 0.46 | 0.022 | 0.0022 | 0.0044 | |
| D | 0.42 | 1.11 | 0.78 | 0.01 | 0.023 | 0.023 | 0.45 | 0.023 | 0.0022 | 0.0044 | |
| E | 0.41 | 1.25 | 0.77 | 0.01 | 0.022 | 0.023 | 0.45 | 0.023 | 0.0023 | 0.0044 | |
| F | 0.42 | 1.49 | 0.78 | 0.01 | 0.023 | 0.024 | 0.46 | 0.022 | 0.0021 | 0.0042 | |
| G | 0.48 | 0.50 | 0.78 | 0.02 | 0.023 | 0.023 | 0.44 | 0.021 | 0.0021 | 0.0044 | |
| H | 0.42 | 0.50 | 0.78 | 0.06 | 0.022 | 0.024 | 0.46 | 0.023 | 0.0022 | 0.0040 | |
| I | 0.41 | 0.50 | 0.77 | 0.10 | 0.022 | 0.023 | 0.45 | 0.023 | 0.0022 | 0.0044 | |
| J | 0.75 | 0.51 | 0.77 | 0.06 | 0.023 | 0.024 | 0.45 | 0.021 | 0.0023 | 0.0040 | |
| K | 0.41 | 1.25 | 0.77 | 0.06 | 0.022 | 0.023 | 0.45 | 0.023 | 0.0023 | 0.0044 | |
| L | 0.70 | 1.13 | 0.78 | 0.02 | 0.023 | 0.023 | 0.44 | 0.023 | 0.0021 | 0.0042 | |
| M | 0.70 | 0.50 | 0.78 | 0.01 | 0.023 | 0.023 | 0.44 | 0.023 | 0.0021 | 0.0042 | Cu: 0.3, Ni: 0.44 |
| N | 0.70 | 0.50 | 0.78 | 0.01 | 0.023 | 0.023 | 0.44 | 0.023 | 0.0021 | 0.0042 | Co: 0.22, Nb: 0.040 |
| O | 0.70 | 0.50 | 0.78 | 0.01 | 0.023 | 0.023 | 0.44 | 0.023 | 0.0021 | 0.0042 | Cr: 0.8 |
| P | 0.70 | 0.50 | 0.78 | 0.01 | 0.023 | 0.023 | 0.44 | 0.023 | 0.0021 | 0.0042 | V: 0.3 |
| Q | 0.70 | 0.50 | 0.78 | 0.01 | 0.023 | 0.023 | 0.44 | 0.023 | 0.0021 | 0.0042 | Zr: 0.05 |
| R | 0.70 | 0.50 | 0.78 | 0.01 | 0.023 | 0.023 | 0.44 | 0.023 | 0.0021 | 0.0042 | Pb: 0.02 |
| S | 0.70 | 0.50 | 0.78 | 0.01 | 0.023 | 0.023 | 0.44 | 0.023 | 0.0021 | 0.0042 | Bi: 0.07 |
| T | 0.70 | 0.50 | 0.78 | 0.01 | 0.023 | 0.023 | 0.44 | 0.023 | 0.0021 | 0.0042 | Se: 0.01 |

(continued)

| Symbol of steel | Chemical composition (mass%) | | | | | | | | | | |
|---|---|---|---|---|---|---|---|---|---|---|---|
| | C | Si | Mn | P | S | Al | Mo | Ti | B | N | others |
| U | 0.70 | 0.50 | 0.78 | 0.01 | 0.023 | 0.023 | 0.44 | 0.023 | 0.0021 | 0.0042 | Te: 0.01 |
| V | 0.70 | 0.50 | 0.78 | 0.01 | 0.023 | 0.023 | 0.44 | 0.023 | 0.0021 | 0.0042 | Ca: 0.003 |
| W | 0.70 | 0.50 | 0.78 | 0.01 | 0.023 | 0.023 | 0.44 | 0.023 | 0.0021 | 0.0042 | REM: 0.002 |
| X | 0.70 | 0.50 | 0.78 | 0.01 | 0.023 | 0.023 | 0.44 | 0.023 | 0.0021 | 0.0042 | Cu: 0.3, Ni: 0.44, Te: 0.01 |
| Y | 0.48 | 0.51 | 0.79 | 0.011 | 0.022 | 0.025 | 0.45 | 0.021 | 0.0024 | 0.0041 | |
| Z | 0.70 | 0.50 | 0.78 | 0.01 | 0.023 | 0.023 | 0.03 | 0.023 | 0.0021 | 0.0042 | |
| AA | 0.70 | 0.50 | 0.78 | 0.01 | 0.023 | 0.023 | 0.44 | 0.023 | 0.0002 | 0.0042 | |
| AB | 0.70 | 0.50 | 0.78 | 0.01 | 0.023 | 0.023 | 0.44 | 0.002 | 0.0021 | 0.0042 | |
| AC | 0.46 | 1.12 | 0.78 | 0.01 | 0.023 | 0.002 | 0.41 | 0.050 | 0.0022 | 0.0044 | Ca: 0.003 |
| AD | 1.21 | 0.60 | 0.78 | 0.01 | 0.050 | 0.002 | 0.41 | 0.050 | 0.0022 | 0.0044 | Ca: 0.003 |
| AE | 1.21 | 0.60 | 0.78 | 0.01 | 0.035 | <0.001 | 0.41 | 0.050 | 0.0022 | 0.0044 | Ca: 0.003 |

[Table 2]

| Test No. | Symbol of steel | Hot working conditions | | Cold working condition | Induction hardening conditions | | | Microstructure of non-hardened portion | | Microstructure of hardened portion | | Fatigue property | Remarks |
|---|---|---|---|---|---|---|---|---|---|---|---|---|---|
| | | Total working ratio above 800°C (%) | Cooling rate of 500-700°C (°C/s) | Working ratio (%) | Temperature rising rate (°C/s) | Highest Heating Temperature (°C) | Residence time above 800°C (s) | Microstructure construction | Fraction of bainite + martensite (%) | Vickers Hardness (Hv) | Average Grain Size of Prior γ (μm) | Torsional Fatigue Strength (x105) (MPa) | |
| 1 | A | 80 | 1.0 | 40 | 500 | 890 | 1 | pearlite + bainite | 90 | 823 | 3.4 | 941 | Example |
| 2 | B | 80 | 1.0 | 40 | 500 | 880 | 1 | Proeutectoid carbide+bainite + pearlite | 90 | 901 | 2.4 | 959 | Invention Example |
| 3 | C | 80 | 1.0 | 30 | 500 | 880 | 1 | Proeutectoid carbide+bainite + pearlite | 90 | 917 | 3.5 | 989 | Invention Example |
| 4 | D | 80 | 1.0 | 20 | 500 | 880 | 1 | bainite + ferrite + pearlite | 80 | 751 | 1.8 | 890 | Invention Example |
| 5 | E | 80 | 1.0 | 5 | 500 | 885 | 1 | bainite + ferrite + pearlite | 80 | 767 | 1.8 | 892 | Invention Example |
| 6 | F | 80 | 1.0 | 5 | 500 | 890 | 1 | bainite + ferrite + pearlite | 80 | 772 | 2.6 | 900 | Invention Example |
| 7 | G | 80 | 1.0 | 15 | 500 | 875 | 1 | bainite + ferrite + pearlite | 80 | 695 | 2.2 | 800 | Comparative Example |
| 8 | H | 80 | 1.0 | 15 | 500 | 875 | 1 | bainite + ferrite + pearlite | 80 | 750 | 2.1 | 840 | Invention Example |
| 9 | I | 80 | 1.0 | 25 | 500 | 890 | 1 | bainite + ferrite + pearlite | 80 | 763 | 2.7 | 869 | Invention Example |
| 10 | J | 80 | 1.0 | 5 | 500 | 875 | 1 | pearlite + bainite | 90 | 833 | 3.4 | 922 | Invention Example |
| 11 | K | 80 | 1.0 | 5 | 500 | 865 | 1 | bainite + ferrite + pearlite | 80 | 783 | 2.8 | 910 | Invention Example |

EP 1 770 181 B1

[Table 2] (continued)

| | | | | | | | | | | | | | |
|---|---|---|---|---|---|---|---|---|---|---|---|---|---|
| 12 | L | 80 | 1.0 | 25 | 500 | 875 | 1 | pearlite + bainite | 90 | 764 | 2.7 | 976 | Invention Example |
| 13 | M | 80 | 1.0 | 5 | 500 | 880 | 1 | pearlite + bainite | 90 | 768 | 2.7 | 925 | Reference Example |
| 14 | N | 80 | 1.0 | 10 | 500 | 875 | 2 | pearlite + bainite | 90 | 764 | 3.2 | 933 | Reference Example |
| 15 | O | 80 | 1.0 | 0 | 500 | 875 | 1 | pearlite + bainite | 90 | 764 | 1.8 | 930 | Reference Example |
| 16 | P | 80 | 1.0 | 40 | 500 | 880 | 1 | pearlite + bainite | 90 | 767 | 3.2 | 943 | Reference Example |
| 17 | Q | 80 | 1.0 | 25 | 500 | 865 | 1 | pearlite + bainite | 90 | 761 | 1.6 | 936 | Reference Example |
| 18 | R | 80 | 1.0 | 25 | 500 | 870 | 1 | pearlite + bainite | 90 | 759 | 3.1 | 935 | Reference Example |
| 19 | S | 80 | 1.0 | 15 | 500 | 880 | 1 | pearlite + bainite | 90 | 754 | 1.7 | 936 | Reference Example |
| 20 | T | 80 | 1.0 | 35 | 500 | 890 | 4 | pearlite + bainite | 90 | 754 | 3.8 | 934 | Reference Example |
| 21 | U | 80 | 1.0 | 40 | 500 | 885 | 1 | pearlite + bainite | 90 | 756 | 3.1 | 920 | Reference Example |
| 22 | V | 80 | 1.0 | 20 | 500 | 865 | 1 | pearlite + bainite | 90 | 752 | 2.7 | 929 | Reference Example |
| 23 | W | 80 | 1.0 | 15 | 500 | 875 | 1 | pearlite + bainite | 90 | 750 | 2.3 | 930 | Reference Example |
| 24 | X | 80 | 1.0 | 0 | 500 | 865 | 1 | pearlite + bainite | 90 | 770 | 1.9 | 935 | Reference Example |
| 25 | Y | 80 | 1.0 | 35 | 500 | 890 | 1 | pearlite + bainite | 80 | 694 | 2.0 | 805 | Comparative Example |
| 26 | Z | 80 | 1.0 | 20 | 500 | 880 | 1 | ferrite + pearlite | 0 | 690 | 9.7 | 701 | Comparative Example |
| 27 | AA | 80 | 1.0 | 35 | 500 | 890 | 1 | ferrite + pearlite | 0 | 673 | 8.7 | 729 | Comparative Example |
| 28 | AB | 80 | 1.0 | 20 | 500 | 880 | 1 | ferrite + pearlite | 0 | 694 | 8.5 | 741 | Comparative Example |
| 29 | A | 80 | 1.0 | 20 | 500 | 880 | 1 | pearlite + bainite | 90 | 820 | 3.4 | 990 | Invention Example |

[Table 2] (continued)

| 30 | G | 80 | 1.0 | 15 | 500 | 875 | 1 | bainite + ferrite + pearlite | 80 | 752 | 2.2 | 890 | Invention Example |
| 31 | A | 50 | 1.0 | 10 | 500 | 890 | 1 | pearlite + bainite | 90 | 823 | 8.1 | 780 | Comparative Example |
| 32 | AC | 80 | 0.5 | 0 | 300 | 950 | 1 | bainite + ferrite + pearlite | 80 | 760 | 5.0 | 930 | Invention Example |
| 33 | AD | 80 | 0.5 | 0 | 300 | 950 | 1 | Proeutectoid carbide + bainite + pearlite | 80 | 900 | 5.3 | 890 | Invention Example |
| 34 | AE | 80 | 0.5 | 0 | 300 | 950 | 1 | Proeutectoid carbide + bainite + pearlite | 80 | 905 | 5.2 | 930 | Invention Example |

EXAMPLE 2

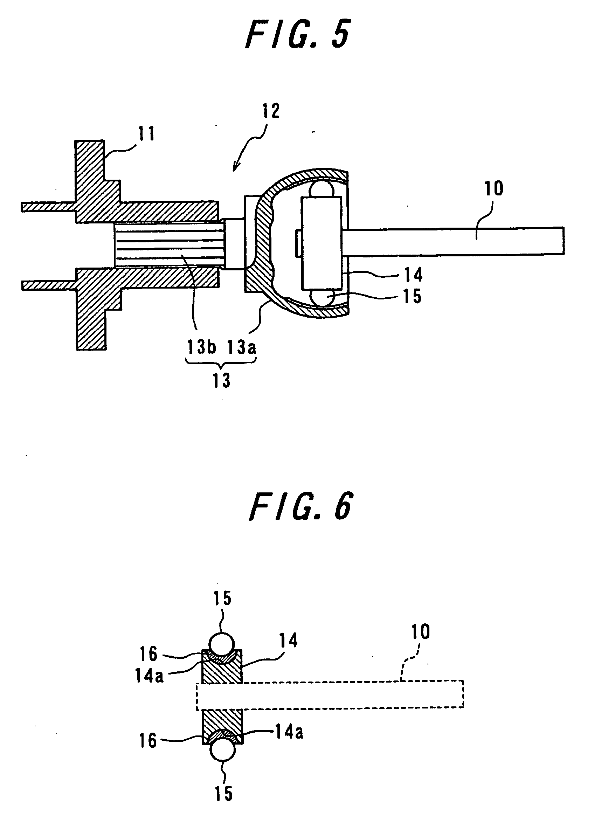

As a component for machine structure according to the invention is prepared a constant velocity joint 12 interposed for transmitting a motive energy from a drive shaft 10 to a wheel hub 11 as shown in FIG. 5. The constant velocity joint 12 is a combination of an outer wheel 13 sand an inner wheel 14. That is, the inner wheel 14 is swingablly fixed to an inside of a mouth portion 13a of the outer wheel 13 through balls 15 fitted into a ball track groove formed in the inner face of the mouth portion 13a, while the drive shaft 10 is connected to the inner wheel 14. A stem portion 13b of the outer wheel 13 is, for example, spline-bonded to the hub 11, whereby the motive energy is transmitted from the drive shaft 10 to the hub 11 of the wheel.

A starting material of steel having a chemical composition shown in Table 3 is melted in a converter and continuously cast to form a cast bloom. The cast bloom has a size of 300 x 400 mm. The cast bloom is rolled into a billet of 150 mm square through a break down step and then rolled into a bar steel of 55 mmφ. Then, the bar steel is cut into a given length and hot-forged to form an inner wheel of a constant velocity joint (outer diameter: 45 mm and inner diameter: 20 mm), and thereafter a groove for spline bond is formed on a fitting face thereof by machining or roll forming. Also, a rolling face for balls is formed by machining or cold forging. The cooling after the hot forging is carried out under conditions shown in Table 4. At this moment, the total working ratio in the hot forging and cold forging is obtained by adjusting an area reducing ratio of a section perpendicular to an axial direction of the rolling face.

As shown in FIG. 6, the rolling face 14a for balls lying to the outer wheel of the constant velocity joint is rendered into a hardened texture layer 16 by subjecting to an induction hardening at 1050°C and to a subsequent induction hardening under conditions shown in Table 4 in an induction hardening apparatus with a frequency of 15 Hz, which is tempered under conditions of 180°C x 2 h in a heating furnace. Moreover, the tempering is omitted in a part of the constant velocity joints. The drive shaft is fitted onto the fitting face of the inner wheel of the thus obtained constant velocity joint, which is mounted to the mouth portion of the outer wheel of the constant velocity joint through balls (steel balls), while the hub is fitted into the stem portion of the outer wheel of the constant velocity joint, whereby there is obtained a constant velocity joint unit (see FIG. 5). Moreover, the specifications of the ball, outer wheel, drive shaft and hub are shown as follows.
Ball: hardened and tempered steel of high carbon chromium bearing steel SUJ2 Outer wheel: induction hardened and tempered steel of carbon steel for machine structure
Hub: induction hardened and tempered steel of carbon steel for machine structure Drive shaft: induction hardened and tempered steel of carbon steel for machine structure

Then, the durable test for rolling fatigue strength in the rolling face for balls is carried out in a motive energy transmission system of the constant velocity joint in which a rotational motion of the drive shaft is transmitted to the inner wheel of the constant velocity joint and then through the inner wheel to the hub.
The test for the rolling fatigue strength is carried out by the motive energy transmission under conditions that a torque is 900 N • m and an operating angle (an angle defined between axial line of inner wheel and axial line of drive shaft) is 20° and a revolution number is 300 rpm, and a time causing the peeling in the rolling face of the inner wheel of the constant velocity joint is evaluated as the rolling fatigue strength. Moreover, the dimensions and forms of the drive shaft, outer wheel of constant velocity joint and the like are set so that the inner wheel of the constant velocity joint becomes weakest in the durable test.
Also, the average grain size of prior austenite and hardness in the hardened layer with respect to the inner wheel of the constant velocity joints prepared under the same conditions are measured by the same methods as mentioned above. In Table 4 are also shown these results.

[Table 3]

| Symbol of steel | Chemical composition (mass%) | | | | | | | | | | |
|---|---|---|---|---|---|---|---|---|---|---|---|
| | C | Si | Mn | P | S | Al | Mo | Ti | B | N | others |
| A | 0.75 | 0.49 | 0.75 | 0.01 | 0.023 | 0.023 | 0.45 | 0.022 | 0.0021 | 0.0041 | |
| B | 1.23 | 0.50 | 0.78 | 0.01 | 0.023 | 0.023 | 0.44 | 0.023 | 0.0022 | 0.0042 | |
| C | 1.44 | 0.50 | 0.78 | 0.01 | 0.023 | 0.024 | 0.46 | 0.021 | 0.0021 | 0.0044 | |
| D | 0.41 | 1.10 | 0.78 | 0.01 | 0.023 | 0.024 | 0.45 | 0.023 | 0.0022 | 0.0044 | |
| E | 0.42 | 1.30 | 0.77 | 0.01 | 0.022 | 0.023 | 0.45 | 0.022 | 0.0023 | 0.0044 | |
| F | 0.42 | 1.50 | 0.78 | 0.01 | 0.023 | 0.024 | 0.46 | 0.022 | 0.0021 | 0.0042 | |

(continued)

| Symbol of steel | Chemical composition (mass%) | | | | | | | | | | |
|---|---|---|---|---|---|---|---|---|---|---|---|
| | C | Si | Mn | P | S | Al | Mo | Ti | B | N | others |
| G | 0.48 | 0.49 | 0.78 | 0.02 | 0.023 | 0.023 | 0.44 | 0.023 | 0.0023 | 0.0044 | |
| H | 0.41 | 0.50 | 0.78 | 0.06 | 0.022 | 0.024 | 0.46 | 0.023 | 0.0022 | 0.0040 | |
| I | 0.42 | 0.50 | 0.77 | 0.10 | 0.022 | 0.023 | 0.45 | 0.023 | 0.0022 | 0.0044 | |
| J | 0.75 | 0.51 | 0.77 | 0.06 | 0.023 | 0.024 | 0.45 | 0.023 | 0.0021 | 0.0040 | |
| K | 0.41 | 1.27 | 0.77 | 0.06 | 0.022 | 0.024 | 0.45 | 0.023 | 0.0023 | 0.0044 | |
| L | 0.70 | 1.10 | 0.78 | 0.02 | 0.023 | 0.023 | 0.44 | 0.021 | 0.0021 | 0.0042 | |
| M | 0.70 | 0.50 | 0.77 | 0.01 | 0.023 | 0.023 | 0.44 | 0.023 | 0.0021 | 0.0040 | Cu: 0.31, Ni: 0.46 |
| N | 0.70 | 0.50 | 0.78 | 0.01 | 0.023 | 0.023 | 0.44 | 0.021 | 0.0021 | 0.0042 | Co: 0.20, Nb: 0.043, V: 0.18 |
| O | 0.70 | 0.50 | 0.77 | 0.01 | 0.023 | 0.023 | 0.44 | 0.023 | 0.0022 | 0.0042 | Cr: 0.8 |
| P | 0.70 | 0.50 | 0.78 | 0.01 | 0.023 | 0.024 | 0.44 | 0.023 | 0.0021 | 0.0042 | V: 0.3 |
| Q | 0.70 | 0.50 | 0.78 | 0.01 | 0.023 | 0.023 | 0.44 | 0.023 | 0.0021 | 0.0042 | Zr: 0.05 |
| R | 0.70 | 0.50 | 0.79 | 0.01 | 0.023 | 0.023 | 0.44 | 0.023 | 0.0021 | 0.0042 | Pb: 0.02 |
| S | 0.70 | 0.50 | 0.78 | 0.01 | 0.023 | 0.023 | 0.44 | 0.023 | 0.0022 | 0.0042 | Bi: 0.07 |
| T | 0.70 | 0.50 | 0.77 | 0.01 | 0.023 | 0.024 | 0.44 | 0.023 | 0.0021 | 0.0042 | Se: 0.01 |
| U | 0.70 | 0.50 | 0.78 | 0.01 | 0.023 | 0.023 | 0.44 | 0.023 | 0.0021 | 0.0040 | Te: 0.01 |
| V | 0.70 | 0.50 | 0.78 | 0.01 | 0.023 | 0.023 | 0.44 | 0.023 | 0.0021 | 0.0042 | Ca: 0.003 |
| W | 0.70 | 0.50 | 0.79 | 0.01 | 0.023 | 0.024 | 0.44 | 0.023 | 0.0021 | 0.0042 | REM: 0.002 |
| X | 0.70 | 0.50 | 0.78 | 0.01 | 0.023 | 0.023 | 0.44 | 0.023 | 0.0021 | 0.0042 | Cu: 0.3, Ni: 0.44, Te: 0.01 |
| Y | 0.48 | 0.51 | 0.79 | 0.01 | 0.022 | 0.024 | 0.45 | 0.021 | 0.0024 | 0.0041 | |
| Z | 0.70 | 0.50 | 0.78 | 0.01 | 0.023 | 0.023 | 0.02 | 0.022 | 0.0021 | 0.0042 | |
| AA | 0.70 | 0.50 | 0.78 | 0.01 | 0.023 | 0.025 | 0.44 | 0.023 | 0.0002 | 0.0042 | |
| AB | 0.70 | 0.50 | 0.78 | 0.01 | 0.023 | 0.023 | 0.44 | 0.002 | 0.0021 | 0.0042 | |
| AC | 0.46 | 1.12 | 0.78 | 0.01 | 0.023 | 0.002 | 0.41 | 0.050 | 0.0022 | 0.0044 | Ca: 0.003 |
| AD | 1.21 | 0.60 | 0.78 | 0.01 | 0.050 | 0.002 | 0.41 | 0.050 | 0.0022 | 0.0044 | Ca: 0.003 |

(continued)

| Symbol of steel | Chemical composition (mass%) | | | | | | | | | | |
|---|---|---|---|---|---|---|---|---|---|---|---|
| | C | Si | Mn | P | S | Al | Mo | Ti | B | N | others |
| AE | 1.21 | 0.60 | 0.78 | 0.01 | 0.035 | <0.001 | 0.41 | 0.050 | 0.0022 | 0.0044 | Ca: 0.003 |

[Table 4]

| Test No. | Symbol of steel | Hot working conditions | | Cold working condition | Induction hardening conditions | | | Microstructure of non-hardened portion | | Microstructure of hardened portion | | | Fatigue property | Remarks |
|---|---|---|---|---|---|---|---|---|---|---|---|---|---|---|
| | | Total working ratio above 800°C (%) | Cooling rate of 500-700°C (°C/s) | Working ratio (%) | Temperature rising rate (°C/s) | Highest Heating Temperature (°C) | Residence Time Above 800°C (s) | Microstructure construction | Fraction of bainite + martensite (%) | Vickers Hardness (Hv) | Average Grain size of prior γ (μm) | Presence or absence of tempering | Rolling Fatigue life (hr) | |
| 1 | A | 80 | 1.0 | 40 | 500 | 890 | 1 | Pearlite + bainite | 90 | 823 | 3.4 | presence | 163 | Invention Example |
| 2 | B | 80 | 1.0 | 40 | 500 | 880 | 1 | Proeutectoid carbide+bainite +pearlite | 90 | 901 | 2.4 | presence | 177 | Invention Example |
| 3 | C | 80 | 1.0 | 30 | 500 | 880 | 1 | proeutectoid carbide+bainite +pearlite | 90 | 917 | 3.5 | presence | 173 | Invention Example |
| 4 | D | 80 | 1.0 | 20 | 500 | 885 | 1 | bainite + ferrite + pearlite | 80 | 751 | 1.8 | presence | 151 | Invention Example |
| 5 | E | 80 | 1.0 | 5 | 500 | 890 | 1 | bainite + ferrite + pearlite | 80 | 767 | 1.8 | presence | 148 | Invention Example |
| 6 | F | 80 | 1.0 | 5 | 500 | 875 | 1 | bainite + ferrite + pearlite | 80 | 772 | 2.6 | presence | 155 | Invention Example |
| 7 | G | 80 | 1.0 | 15 | 500 | 875 | 1 | bainite + ferrite + pearlite | 80 | 695 | 2.2 | presence | 141 | Comparative Example |
| 8 | H | 80 | 1.0 | 15 | 500 | 890 | 1 | bainite + ferrite + pearlite | 80 | 750 | 2.1 | presence | 152 | Invention Example |
| 9 | I | 80 | 1.0 | 25 | 500 | 875 | 1 | bainite + ferrite + pearlite | 80 | 763 | 2.7 | presence | 152 | Invention Example |
| 10 | J | 80 | 1.0 | 5 | 500 | 865 | 1 | pearlite + bainite | 90 | 833 | 3.4 | presence | 167 | Invention Example |

EP 1 770 181 B1

[Table 4] (continued)

| | | 80 | 1.0 | | 500 | | | | 80 | 783 | 2.8 | presence | 150 | Invention Example |
|---|---|---|---|---|---|---|---|---|---|---|---|---|---|---|
| 11 | K | 80 | 1.0 | 5 | 500 | 875 | 1 | bainite + ferrite + pearlite | 80 | 783 | 2.8 | presence | 150 | Invention Example |
| 12 | L | 80 | 1.0 | 25 | 500 | 880 | 1 | Pearlite+ bainite | 90 | 764 | 2.7 | presence | 181 | Reference Example |
| 13 | M | 80 | 1.0 | 5 | 500 | 875 | 1 | Pearlite+ bainite | 90 | 768 | 2.7 | presence | 165 | Reference Example |
| 14 | N | 80 | 1.0 | 10 | 500 | 875 | 2 | pearlite+ bainite | 90 | 764 | 3.2 | presence | 164 | Reference Example |
| 15 | O | 80 | 1.0 | 0 | 500 | 880 | 1 | pearlite+ bainite | 90 | 764 | 1.8 | presence | 166 | Reference Example |
| 16 | P | 80 | 1.0 | 40 | 500 | 865 | 1 | pearlite+ bainite | 90 | 767 | 3.2 | presence | 172 | Reference Example |
| 17 | Q | 80 | 1.0 | 25 | 500 | 865 | 1 | pearlite+ bainite | 90 | 761 | 1.6 | presence | 168 | Reference Example |
| 18 | R | 80 | 1.0 | 25 | 500 | 870 | 1 | pearlite+ bainite | 90 | 759 | 3.1 | presence | 161 | Reference Example |
| 19 | S | 80 | 1.0 | 15 | 500 | 880 | 1 | pearlite+ bainite | 90 | 754 | 1.7 | presence | 159 | Reference Example |
| 20 | T | 80 | 1.0 | 35 | 500 | 890 | 4 | pearlite+ bainite | 90 | 754 | 3.8 | presence | 160 | Reference Example |
| 21 | U | 80 | 1.0 | 40 | 500 | 885 | 1 | pearlite+ bainite | 90 | 756 | 3.1 | presence | 163 | Reference Example |
| 22 | V | 80 | 1.0 | 20 | 500 | 865 | 1 | pearlite+ bainite | 90 | 752 | 2.7 | presence | 164 | Reference Example |
| 23 | W | 80 | 1.0 | 15 | 500 | 875 | 1 | Pearlite +bainite | 90 | 750 | 2.3 | presence | 162 | Reference Example |
| 24 | X | 80 | 1.0 | 0 | 500 | 865 | 1 | pearlite+ bainite | 90 | 770 | 1.9 | presence | 160 | Reference Example |
| 25 | Y | 80 | 1.0 | 35 | 500 | 890 | 1 | pearlite+ bainite | 80 | 694 | 2.0 | presence | 141 | Comparative Example |
| 26 | Z | 80 | 1.0 | 20 | 500 | 880 | 1 | ferrite+ pearlite | 0 | 690 | 9.7 | presence | 120 | Comparative Example |
| 27 | AA | 80 | 1.0 | 35 | 500 | 890 | 1 | Ferrite +pearlite | 0 | 673 | 8.7 | presence | 131 | Comparative Example |

23

[Table 4] (continued)

| 28 | AB | 80 | 1.0 | 20 | 500 | 880 | 1 | ferrite+ pearlite | 0 | 694 | 8.5 | presence | 137 | Comparative Example |
| 29 | A | 80 | 1.0 | 20 | 500 | 880 | 1 | pearlite+ bainite | 90 | 820 | 3.4 | absence | 180 | Invention Example |
| 30 | G | 80 | 1.0 | 15 | 500 | 875 | 1 | Bainite+ferrite + pearlite | 80 | 752 | 2.2 | absence | 150 | Invention Example |
| 31 | A | 50 | 1.0 | 10 | 500 | 890 | 1 | pearlite+ bainite | 90 | 823 | 8.1 | presence | 140 | Comparative Example |
| 32 | AC | 70 | 0.7 | 0 | 300 | 950 | 1 | bainite+ferrite+ pearlite | 80 | 760 | 5.0 | presence | 162 | Invention Example |
| 33 | AD | 70 | 0.7 | 0 | 300 | 950 | 1 | Proeutectoid carbide+bainite + pearlite | 80 | 900 | 5.2 | presence | 179 | Invention Example |
| 34 | AE | 70 | 0.7 | 0 | 300 | 950 | 1 | Proeutectoid carbide+bainite + pearlite | 80 | 906 | 5.2 | presence | 173 | Invention Example |

As seen from Table 4, Nos. 7 and 25 are comparative examples wherein all contents of C, Si and P are low, and the rolling fatigue life is improved in the invention examples as compared with these comparative examples. Also, when the content of Mo, B or Ti is lacking as in Nos. 26, 27 and 28, the grain size of the prior austenite is coarsened and the rolling fatigue life lowers. Further, in Nos. 26, 27 and 28, the microstructure of the base material is particularly ferrite-pearlite, so that the grain size of the prior austenite is coarsened and the rolling fatigue life lowers. In addition, when the tempering treatment is omitted after the induction hardening as in Nos. 29 and 30, the rolling fatigue life is further improved as compared with No. 1 steel and No. 7 steel, respectively. Moreover, in No. 31 steel, the total working ration of 800-1000°C in the hot working is small, so that the grain size of the prior austenite becomes large and the rolling fatigue life is low.

**Claims**

1. A component for machine structure **characterized by** comprising a hardened layer through an induction hardening in at least a part thereof, in which the hardened layer of a thickness of not less than 1 mm has a hardness Hv of not less than 750 and an average grain size of prior austenite grains is not more than 7 $\mu$m over a full thickness of the hardened layer;
   the component having a chemical composition comprising C: 0.3-1.5 mass%, Si: 0.05-3.0 mass%, Mn: 0.2-2.0 mass%, Al: not more than 0.25 mass%, Ti: 0.005-0.1 mass%, Mo: 0.05-0.6 mass%, B: 0.0003-0.006 mass%, S: not more than 0.1 mass% and P: not more than 0.10 mass%,
   and further optionally comprising one or more selected from Cr: not more than 2.5 mass%, Cu: not more than 1.0 mass%, Ni: not more than 3.5 mass%, Co: not more than 1.0 mass%, Nb: not more than 0.1 mass%, V: not more than 0.5 mass%, Ca: not more than 0.005 mass%, Te: not more than 0.1 mass%, Se: not more than 0.1 mass%, Bi: not more than 0.5 mass%, Pb: not more than 0.5 mass%, Zr: not more than 0.01 mass% and REM: not more than 0.1 mass%.
   and the remainder being Fe and inevitable impurities,
   and satisfying at least one of the following equations (1)-(3):

$$C > 0.7 \text{ mass\% } ....(1)$$

$$Si > 1.1 \text{ mass\% } ....(2)$$

$$P > 0.02 \text{ mass\% } ....(3),$$

   wherein Mo-based precipitate having an average particle size of not more than 20 nm is dispersed in an amount of not less than 500 per 1 $\mu$m$^3$, and
   wherein either or both of bainite structure and martensite structure in the steel microstructure of the starting material prior to the induction hardening is 10 to 90 volume%.

2. A component for machine structure according to claim 1, wherein the content of Al in the chemical composition is Al: 0.005-0.25 mass%.

3. A component for machine structure according to claim 1, which has a chemical composition comprising C: 0.3-1.5 mass%, Si: 0.05-3.0 mass%, Mn: 0.2-2.0 mass%, Al: not more than 0.25 mass%, Ti: 0.005-0.1 mass%, Mo: 0.05-0.6 mass%, B: 0.0003-0.006 mass%, S: not more than 0.1 mass% and P: not more than 0.10 mass% and the remainder being Fe and inevitable impurities in which the hardened layer is not subjected to a tempering.

4. A component for machine structure according to claim 3, wherein the content of Al in the composition is Al: 0.005-0.25 mass%.

5. A method of producing a component for machine structure by subjecting a starting material having a chemical composition comprising C: 0.3-1.5 mass%, Si: 0.05-3.0 mass%, Mn: 0.2-2.0 mass%, Al: not more than 0.25 mass%, Ti: 0.005-0.1 mass%, Mo: 0.05-0.6 mass%, B: 0.0003-0.006 mass%, S: not more than 0.1 mass% and P: not more than 0.10 mass%,

and further optionally comprising one or more selected from Cr: not more than 2.5 mass%, Cu: not more than 1.0 mass%, Ni: not more than 3.5 mass%, Co: not more than 1.0 mass%, Nb: not more than 0.1 mass%, V: not more than 0.5 mass%, Ca: not more than 0.005 mass%, Te: not more than 0.1 mass%, Se: not more than 0.1 mass%, Bi: not more than 0.5 mass%, Pb: not more than 0.5 mass%, Zr: not more than 0.01 mass% and REM: not more than 0.1 mass%,

and the remainder being Fe and inevitable impurities, and satisfying at least one of the following equations (1)-(3):

$$C > 0.7 \text{ mass\%} \dots(1)$$

$$Si > 1.1 \text{ mass\%} \dots(2)$$

$$P > 0.02 \text{ mass\%} \dots(3)$$

to a hot working, in which the total working ratio at 800-1000 °C is not less than 80 % and cooling in a subsequent temperature region of 700-500 °C is conducted at a rate of not less than 0.2 °C/s, and then subjecting at least a part of a starting material to an induction hardening at least once, wherein an ultimate temperature of the induction hardening is not higher than 1000°C, a Temperature rising rate from 600-800 °C is at least 300 °C/s and a heating time is not more than 5 s, and

wherein either or both of bainite structure and martensite structure in steel microstructure of the starting material prior to the induction hardening is 10 to 90 volume%, and Mo-based precipitate having an average particle size of not more than 20 nm is dispersed in an amount of not less than 500 per 1 $\mu$m$^3$.

6. A method of producing a component for machine structure according to claim 5, wherein a content of Al in the chemical composition is Al: 0.005-0.25 mass%.

7. A material for induction hardening used for the formation of a component for machine structure having in at least a part of its surface a hardened layer with an average grain size of prior austenite of not more than 7 $\mu$m,

**characterized in that** the material has a chemical composition comprising C: 0.3-1.5 mass%, Si: 0.05-3.0 mass%, Mn: 0.2-2.0 mass%, Al: not more than 0.25 mass%, Ti: 0.005-0.1 mass%, Mo: 0.05-0.6 mass%, B: 0.0003-0.006 mass%, S: not more than 0.1 mass% and P: not more than 0.10 mass%,

and further optionally comprising one or more selected from Cr: not more than 2.5 mass%, Cu: not more than 1.0 mass%, Ni: not more than 3.5 mass%, Co: not more than 1.0 mass%, Nb: not more than 0.1 mass%, V: not more than 0.5 mass%, Ca: not more than 0.005 mass%, Te: not more than 0.1 mass%, Se: not more than 0.1 mass%, Bi: not more than 0.5 mass%, Pb: not more than 0.5 mass%, Zr: not more than 0.01 mass% and REM: not more than 0.1 mass%

and the remainder being Fe and inevitable impurities, and satisfying at least one of the following equations (1)-(3):

$$C > 0.7 \text{ mass\%} \dots(1)$$

$$Si > 1.1 \text{ mass\%} \dots(2)$$

$$P > 0.02 \text{ mass\%} \dots(3)$$

and having a steel microstructure in which either or both of bainite structure and martensite structure is 10 to 90 volume%,

wherein Mo-based precipitate having an average particle size of not more than 20 nm is dispersed inan amount of not less than 500 per 1 $\mu$m$^3$.

8. A material for induction hardening according to claim 7, wherein the content of Al in the composition is Al: 0.005-0.25 mass%.

**Patentansprüche**

1. Komponente für eine Maschinenstruktur, **dadurch gekennzeichnet, dass** sie eine durch Induktionshärtung in mindestens einem Teil davon gehärtete Schicht umfasst, wobei die gehärtete Schicht mit einer Dicke von nicht weniger als 1 mm eine Härte Hv von nicht weniger als 750 aufweist und eine durchschnittliche Korngröße von ursprünglichen Austenitkörnern nicht mehr als 7 µm über eine gesamte Dicke der gehärteten Schicht ist;
wobei die Komponente eine chemische Zusammensetzung aufweist, die C: 0,3-1,5 Masse%, Si: 0,05-3,0 Masse%, Mn: 0,2-2,0 Masse%, Al: nicht mehr als 0,25 Masse%, Ti: 0,005-0,1 Masse%, Mo: 0,05-0,6 Masse%, B: 0,0003-0,006 Masse%, S: nicht mehr als 0,1 Masse% und P: nicht mehr als 0,10 Masse% umfasst,
und weiterhin gegebenenfalls eines oder mehrere ausgewählt aus Cr: nicht mehr als 2,5 Masse%, Cu: nicht mehr als 1,0 Masse%, Ni: nicht mehr als 3,5 Masse%, Co: nicht mehr als 1,0 Masse%, Nb: nicht mehr als 0,1 Masse%, V: nicht mehr als 0,5 Masse%, Ca: nicht mehr als 0,005 Masse%, Te: nicht mehr als 0,1 Masse%, Se: nicht mehr als 0,1 Masse%, Bi: nicht mehr als 0,5 Masse%, Pb: nicht mehr als 0,5 Masse%, Zr: nicht mehr als 0,01 Masse% und SEM: nicht mehr als 0,1 Masse%,
und den Rest umfasst, der aus Fe und unvermeidlichen Verunreinigungen besteht,
und mindestens eine der folgenden Gleichungen (1)-(3) erfüllt:

$$C > 0{,}7 \ \text{Masse\%} \ \ldots (1)$$

$$Si > 1{,}1 \ \text{Masse\%} \ \ldots (2)$$

$$P > 0{,}02 \ \text{Masse\%} \ \ldots (3),$$

worin ein Mo-basiertes Fällungsprodukt mit einer durchschnittlichen Partikelgröße von nicht mehr als 20 nm in einer Menge von nicht weniger als 500 pro 1 µm$^3$ dispergiert ist und
worin entweder die Bainitstruktur oder die Martensitstruktur oder beide in der Stahlmikrostruktur des Ausgangsmaterials vor der Induktionshärtung 10 bis 90 Vol.% einnehmen.

2. Komponente für eine Maschinenstruktur gemäß Anspruch 1, worin der Al-Gehalt in der chemischen Zusammensetzung Al: 0,005-0,25 Masse% beträgt.

3. Komponente für eine Maschinenstruktur gemäß Anspruch 1, die eine chemische Zusammensetzung aufweist, die C: 0,3-1,5 Masse%, Si: 0,05-3,0 Masse%, Mn: 0,2-2,0 Masse%, Al: nicht mehr als 0,25 Masse%, Ti: 0,005-0,1 Masse%, Mo: 0,05-0,6 Masse%, B: 0,0003-0,006 Masse%, S: nicht mehr als 0,1 Masse% und P: nicht mehr als 0,10 Masse% und den Rest umfasst, der aus Fe und unvermeidlichen Verunreinigungen besteht, wobei die gehärtete Schicht keinem Anlassen unterzogen wird.

4. Komponente für eine Maschinenstruktur gemäß Anspruch 3, worin der Al-Gehalt in der Zusammensetzung Al: 0,005-0,25 Masse% beträgt.

5. Verfahren zur Herstellung einer Komponente für eine Maschinenstruktur, indem ein Ausgangsmaterial mit einer chemischen Zusammensetzung, die C: 0,3-1,5 Masse%, Si: 0,05-3,0 Masse%, Mn: 0,2-2,0 Masse%, Al: nicht mehr als 0,25 Masse%, Ti: 0,005-0,1 Masse%, Mo: 0,05-0,6 Masse%, B: 0,0003-0,006 Masse%, S: nicht mehr als 0,1 Masse% und P: nicht mehr als 0,10 Masse% umfasst,
und die weiterhin gegebenenfalls eines oder mehrere ausgewählt aus Cr: nicht mehr als 2,5 Masse%, Cu: nicht mehr als 1,0 Masse%, Ni: nicht mehr als 3,5 Masse%, Co: nicht mehr als 1,0 Masse%, Nb: nicht mehr als 0,1 Masse%, V: nicht mehr als 0,5 Masse%, Ca: nicht mehr als 0,005 Masse%, Te: nicht mehr als 0,1 Masse%, Se: nicht mehr als 0,1 Masse%, Bi: nicht mehr als 0,5 Masse%, Pb: nicht mehr als 0,5 Masse%, Zr: nicht mehr als 0,01 Masse% und SEM: nicht mehr als 0,1 Masse%,
und den Rest umfasst, der aus Fe und unvermeidlichen Verunreinigungen besteht, und mindestens eine der folgenden Gleichungen (1)-(3) erfüllt:

$$C > 0{,}7 \ \text{Masse\%} \ \ldots (1)$$

$$Si > 1,1 \quad Masse\% \quad ....(2)$$

$$P > 0,02 \quad Masse\% \quad ....(3),$$

einer Warmumformung unterzogen wird, in der der Gesamtumformungsanteil bei 800-1.000°C nicht weniger als 80 % beträgt und eine Kühlung in einem anschließenden Temperaturbereich von 700-500°C bei einer Rate von nicht weniger als 0,2°C/s durchgeführt wird, und anschließend mindestens ein Teil eines Ausgangsmaterials einer mindestens eimaligen Induktionshärtung unterzogen wird, worin eine Endtemperatur der Induktionshärtung nicht höher als 1.000°C ist, eine Temperaturanstiegsrate von 600-800°C mindestens 300°C/s beträgt und eine Heizdauer nicht mehr als 5 s beträgt, und

worin entweder die Bainitstruktur oder die Martensitstruktur oder beide in der Stahlmikrostruktur des Ausgangsmaterials vor der Induktionshärtung 10 bis 90 Vol.% einnehmen, und ein Mo-basiertes Fällungsprodukt mit einer durchschnittlichen Partikelgröße von nicht mehr als 20 nm in einer Menge von nicht weniger als 500 pro 1 $\mu m^3$ dispergiert ist.

**6.** Verfahren zur Herstellung einer Komponente für eine Maschinenstruktur gemäß Anspruch 5, worin der Al-Gehalt in der chemischen Zusammensetzung Al: 0,005-0,25 Masse% beträgt.

**7.** Material zur Induktionshärtung, das zur Bildung einer Komponente für eine Maschinenstruktur verwendet wird, die in mindestens einem Teil ihrer Oberfläche eine gehärtete Schicht mit einer durchschnittlichen Korngröße von ursprünglichem Austenit von nicht mehr als 7 $\mu m$ aufweist, **dadurch gekennzeichnet, dass** das Material eine chemische Zusammensetzung aufweist, die C: 0,3-1,5 Masse%, Si: 0,05-3,0 Masse%, Mn: 0,2-2,0 Masse%, Al: nicht mehr als 0,25 Masse%, Ti: 0,005-0,1 Masse%, Mo: 0,05-0,6 Masse%, B: 0,0003-0,006 Masse%, S: nicht mehr als 0,1 Masse% und P: nicht mehr als 0,10 Masse% umfasst,

und die weiterhin gegebenenfalls eines oder mehrere ausgewählt aus Cr: nicht mehr als 2,5 Masse%, Cu: nicht mehr als 1,0 Masse%, Ni: nicht mehr als 3,5 Masse%, Co: nicht mehr als 1,0 Masse%, Nb: nicht mehr als 0,1 Masse%, V: nicht mehr als 0,5 Masse%, Ca: nicht mehr als 0,005 Masse%, Te: nicht mehr als 0,1 Masse%, Se: nicht mehr als 0,1 Masse%, Bi: nicht mehr als 0,5 Masse%, Pb: nicht mehr als 0,5 Masse%, Zr: nicht mehr als 0,01 Masse% und SEM: nicht mehr als 0,1 Masse%, und den Rest umfasst, der aus Fe und unvermeidlichen Verunreinigungen besteht, und die mindestens eine der folgenden Gleichungen (1)-(3) erfüllt:

$$C > 0,7 \quad Masse\% \quad ....(1)$$

$$Si > 1,1 \quad Masse\% \quad ....(2)$$

$$P > 0,02 \quad Masse\% \quad ....(3),$$

und eine Stahlmikrostruktur aufweist, in der entweder die Bainitstruktur oder die Martensitstruktur oder beide 10 bis 90 Vol.% einnehmen,

worin Mo-basiertes Fällungsprodukt mit einer durchschnittlichen Partikelgröße von nicht mehr als 20 nm in einer Menge von nicht weniger als 500 pro 1 $\mu m^3$ dispergiert ist.

**8.** Material zur Induktionshärtung gemäß Anspruch 7, worin der Al-Gehalt in der Zusammensetzung Al: 0,005-0,25 Masse% beträgt.

**Revendications**

**1.** Composant pour structure de machine **caractérisé par** le fait de comprendre une couche durcie grâce à une trempe par induction dans au moins une partie de celle-ci, où la couche durcie d'une épaisseur qui n'est pas inférieure à 1 mm présente une dureté Hv qui n'est pas inférieure à 750 et une dimension moyenne des grains de l'austénite résiduelle n'est pas supérieure à 7 $\mu m$ sur une épaisseur totale de la couche durcie ;

le composant ayant une composition chimique comprenant les éléments suivants : C: 0,3-1,5% en masse, Si:

0,05-3,0% en masse, Mn: 0,2-2,0% en masse, Al: pas plus de 0,25% en masse, Ti: 0,005-0,1% en masse, Mo: 0,05-0,6% en masse, B: 0,0003-0,006% en masse, S: pas plus de 0,1% en masse et P: pas plus de 0,10% en masse, et comprenant en outre optionnellement un ou plusieurs élément(s) choisi(s) parmi Cr: pas plus de 2,5% en masse, Cu: pas plus de 1,0% en masse, Ni: pas plus de 3,5% en masse, Co: pas plus de 1,0% en masse, Nb: pas plus de 0,1% en masse, V: pas plus de 0,5% en masse, Ca: pas plus de 0,005% en masse, Te: pas plus de 0,1% en masse, Se: pas plus de 0,1% en masse, Bi: pas plus de 0,5% en masse, Pb: pas plus de 0,5% en masse, Zr: pas plus de 0,01% en masse et REM: pas plus de 0,1% en masse, et le reste étant du Fe et des impuretés inévitables, et satisfaisant au moins l'une des équations (1)-(3) suivantes :

$$C > 0,7\% \text{ en masse } .... \quad (1)$$

$$Si > 1,1 \% \text{ en masse } .... \quad (2)$$

$$P > 0,02 \% \text{ en masse } .... \quad (3)$$

où un précipité à base de Mo ayant une dimension moyenne des particules qui n'est pas supérieure à 20 nm est dispersé en une quantité qui n'est pas inférieure à 500 par 1 $\mu m^3$, et où l'une de la structure bainitique et de la structure martensitique ou les deux à la fois dans la microstructure d'acier du premier matériau avant la trempe par induction est/sont de 10 à 90% en volume.

2. Composant pour structure de machine selon la revendication 1, dans laquelle la teneur en Al dans la composition chimique est Al: 0,005-0,25% en masse.

3. Composant pour structure de machine selon la revendication 1, qui a une composition chimique comprenant C: 0,3-1,5% en masse, Si: 0,05 à 3,0% en masse, Mn: 0,2-2,0% en masse, Al: pas plus de 0,25% en masse, Ti: 0,005-0,1% en masse, Mo: 0,05-0,6% en masse, B: de 0,0003-0,006% en masse, S: pas plus de 0,1% en masse et P: pas plus de 0,10% en masse et le reste étant du Fe et des impuretés inévitables où la couche durcie n'est pas soumise à un tempérage.

4. Composant pour structure de machine selon la revendication 3, dans laquelle la teneur en Al dans la composition est Al: 0,005-0,25% en masse.

5. Procédé de production d'un composant pour structure de machine en soumettant un premier matériau ayant une composition chimique comprenant C: 0,3-1,5% en masse, Si: 0,05-3,0% en masse, Mn: 0,2-2,0% en masse, Al: pas plus de 0,25% en masse, Ti: 0,005-0,1% en masse, Mo: 0,05-0,6% en masse, B: 0,0003-0,006% en masse, S: pas plus de 0,1% en masse et P: pas plus de 0,10% en masse, et comprenant en outre optionnellement un ou plusieurs élément(s) choisi(s) parmi Cr: pas plus de 2,5% en masse, Cu: pas plus de 1,0% en masse, Ni: pas plus de 3,5% en masse, Co: pas plus de 1,0% en masse, Nb: pas plus de 0,1% en masse, V: pas plus de 0,5% en masse, Ca: pas plus de 0,005% en masse, Te: pas plus de 0,1% en masse, Se: pas plus de 0,1% en masse, Bi: pas plus de 0,5% en masse, Pb: pas plus de 0,5% en masse, Zr: pas plus de 0,01% en masse et REM: pas plus de 0,1% en masse, et le reste étant du Fe et des impuretés inévitables, et satisfaisant au moins l'une des équations (1)-(3) suivantes :

$$C > 0,7\% \text{ en masse } .... \quad (1)$$

$$Si > 1,1\% \text{ en masse } .... \quad (2)$$

$$P > 0,02\% \text{ en masse } .... \quad (3)$$

à un travail à chaud, où le rapport de travail total à 800-1000 °C n'est pas inférieur à 80% et un refroidissement dans une zone de température subséquente de 700-500 °C est conduit à une vitesse qui n'est pas inférieure à 0,2 °C/s, puis en soumettant au moins une partie d'un premier matériau à une trempe par induction au moins une fois, où une température finale de la trempe par induction n'est pas supérieure à 1000 °C, une vitesse d'élévation de température de 600-800 °C est d'au moins 300 °C/s et une durée de chauffage n'est pas supérieure à 5 s, et où l'une de la structure bainitique et de la structure martensitique ou les deux à la fois dans la microstructure d'acier du premier matériau avant la trempe par induction est/sont de 10 à 90%, et un précipité à base de Mo ayant une dimension moyenne des particules qui n'est pas supérieure à 20 nm est dispersé en une quantité qui n'est pas inférieure à 500 par 1 $\mu$m$^3$.

6. Procédé de production d'un composant pour structure de machine selon la revendication 5, dans lequel une teneur en Al dans la composition chimique est Al: 0,005-0,25% en masse.

7. Matériau pour une trempe par induction utilisé pour la formation d'un composant pour structure de machine ayant dans au moins une partie de sa surface une couche durcie avec une dimension moyenne des grains de l'austénite résiduelle de pas plus de 7 $\mu$m, **caractérisé en ce que** le matériau présente une composition chimique comprenant C: 0,3-1,5% en masse, Si: 0,05-3,0% en masse, Mn: 0,2-2,0% en masse, Al: pas plus de 0,25% en masse, Ti: 0,005-0,1% en masse, Mo: 0,05-0,6% en masse, B: 0,0003-0,006% en masse, S: pas plus de 0,1% en masse et P: pas plus de 0,10% en masse, et comprenant en outre optionnellement un ou plusieurs élément(s) choisi(s) parmi Cr: pas plus de 2,5% en masse, Cu: pas plus de 1,0% en masse, Ni: pas plus de 3,5% en masse, Co: pas plus de 1,0% en masse, Nb: pas plus de 0,1% en masse, V: pas plus de 0,5% en masse, Ca: pas plus de 0,005% en masse, Te: pas plus de 0,1% en masse, Se: pas plus de 0,1% en masse, Bi: pas plus de 0,5% en masse, Pb: pas plus de 0,5% en masse, Zr: pas plus de 0,01% en masse et REM: pas plus de 0,1% en masse, et le reste étant du Fe et des impuretés inévitables, et satisfaisant au moins l'une des équations (1)-(3) suivantes :

$$C > 0,7\% \text{ en masse } .... \quad (1)$$

$$Si > 1,1\% \text{ en masse } .... \quad (2)$$

$$P > 0,02\% \text{ en masse } .... \quad (3)$$

et ayant une microstructure d'acier dans laquelle l'une de la structure bainitique et de la structure martensitique ou les deux à la fois est/sont de 10 à 90% en volume, où un précipité à base de Mo ayant une dimension moyenne des particules qui n'est pas supérieure à 20 nm est dispersé en une quantité qui n'est pas inférieure à 500 par 1 $\mu$m$^3$.

8. Matériau pour une trempe par induction selon la revendication 7, dans lequel la teneur en Al dans la composition est Al: 0,005 à 0,25% en masse.

## FIG. 1

X a-steel no cold working ◇ d-steel no cold working
+ a-steel cold worked ◆ d-steel cold worked
○ b-steel no cold working □ e-steel no cold working
● b-steel cold worked ■ e-steel cold worked
△ c-steel no cold working
▲ c-steel cold worked

# FIG. 2

Fine precipitation (Mo-Ti system) of
not more tham 10nm
· 2950 precipitates per $1 \mu m^3$

# FIG. 3

Legend:
- ● Mo free (a-steel)
- ○ Mo added (b-steel)
- ◆ Mo added (e-steel)
- ◇ Mo added (d-steel)
- △ Mo added (c-steel)

Y-axis: Torsional fatigue strength [1×10⁵] (MPa)

X-axis: Average grain size of prior austenite (μm)

# FIG. 4

# FIG. 5

# FIG. 6

**EP 1 770 181 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000154819 A
- JP H0853714 A
- US 5803993 A
- US 6270596 B1